# EUROPÄISCHE PATENTANMELDUNG

(11) **EP 4 414 759 A2**
(43) Veröffentlichungstag der Anmeldung: **14.08.2024**
(21) Anmeldenummer: 24178966.8
(22) Anmeldetag: 19.06.2020
(51) Int. Cl.: G02B 6/34

(54) **FASERAUSTRITTSELEMENT**

(30) Priorität: 21.06.2019 DE 102019116839
(62) Teilanmeldung aus: 20735288.1
(71) Anmelder: FIBERBRIDGE PHOTONICS GMBH, 30419 Hannover (DE)
(72) Erfinder: Theeg, Thomas, 30926 Seelze (DE); Pulzer, Tony, 30827 Garbsen (DE)
(74) Vertreter: Holz, Christian

(57) **Zusammenfassung**

Die vorliegende Erfindung betrifft ein Faseraustrittselement (1) mit einer Mehrzahl von Glasfasern (10) mit jeweils wenigstens einem Kern (10a), welcher jeweils ausgebildet ist, eine Signallichtstrahlung (A) zu führen, und mit wenigstens einem optischen Element (14), vorzugsweise einem optischen Fenster (14), einer optischen Linse (14), einem optischen Strahlteiler (14) oder einem optischen Prisma (14), welches mit jeweils einem offenen Ende (11) der Kerne (10a) der Glasfasern (10) verbunden und ausgebildet ist, die Signallichtstrahlung (A) von den offenen Enden (11) der Kerne (10a) der Glasfasern (10) zu erhalten und als Austrittsstrahlungen (A') über wenigstens eine Austrittsfläche (14b) nach außerhalb abzugeben, wobei die offenen Enden (11) der Kerne (10a) der Glasfasern (10), vorzugsweise ferner die offenen Enden (11) von die Kerne (10a) im Wesentlichen umschließenden Mänteln (10b) der Glasfasern (10), mit jeweils einer Eindringtiefe (W), vorzugsweise gegenüber einer Eintrittsfläche (14a) des optischen Elements (14), innerhalb des Materials des optischen Elements (14) angeordnet sind, wobei wenigstens das Material der offenen Enden (11) der Kerne (10a) der Glasfasern (10), vorzugsweise ferner das Material der offenen Enden (11) der Mäntel (10b) der Glasfasern (10), mit dem Material des optischen Elements (14) verschmolzen ist. Das Faseraustrittselement (1) ist dadurch gekennzeichnet, dass wenigstens eine, vorzugsweise einige, besonders vorzugsweise alle, der Glasfasern (10) wenigstens einen Mantel (10b) aufweist, welcher den Kern (10a) im Wesentlichen umschließt, wobei im Bereich des Faseraustrittselements (1) wenigstens eine Pumplichtfalle (12), vorzugs-weise als Vertiefungen (12), in dem Material des Mantels (10b) der Glasfaser (1) ausgebildet ist, um Mantellicht aus dem Mantel (10b) der Glasfaser (1) nach außerhalb der Glasfaser (1) abzuführen, wobei die Pumplichtfalle (12) im Bereich des Faseraustrittselements (1) vorzugsweise zusätzlich zu wenigstens einer Pumplichtfalle im vorangehenden Verlauf der Glasfaser (10) außerhalb des Bereich des Faseraustrittselements (1) ausgebildet ist.

## Beschreibung

Die vorliegende Erfindung betrifft ein Faseraustrittselement gemäß dem Oberbegriff des Patentanspruchs 1.

Auf vielen verschiedenen technischen Gebieten werden heutzutage Glasfasern verwendet. Zu den technischen und insbesondere hochtechnischen Anwendungen gehört die Verwendung von Glasfasern zur Lichtübertragung. So werden Glasfasern zur Datenübertragung mittels Licht verwendet; in diesem Fall können die Glasfasern auch als Lichtwellenleiter bzw. als passive Glasfasern bezeichnet werden. Auch werden Glasfasern in der Medizin zum Beispiel zur Beleuchtung sowie zur Erzeugung von Abbildungen zum Beispiel in Mikroskopen, in Inspektionskameras sowie in Endoskopen verwendet. Ferner werden Glasfasern bei Sensoren eingesetzt, welche dann als faseroptische Sensoren bezeichnet werden können.

Ein weiteres Anwendungsgebiet für Glasfasern stellt die Lasertechnik dar. Hier kann die Laserstrahlung als Signallichtstrahlung mittels einer passiven Glasfaser von einer Laserstrahlungsquelle als Signallichtquelle bzw. als Signallichtstrahlungsquelle zu einer Bearbeitungsstelle geleitet werden, um dort zum Beispiel in der Materialbearbeitung oder in der Medizin zum Beispiel ein Schneiden oder ein Schweißen durchzuführen. Auch kann der Laserstrahl als Laserstrahlung auf diese Art und Weise zum Beispiel in der Messtechnik, in der Mikroskopie oder in der Spektroskopie zum Beispiel einer Probe zugeführt werden. Der Einsatz von passiven Glasfasern zur Leitung eines Laserstrahls kann zum Beispiel bei Anwendungen im Maschinenbau, in der Telekommunikation, in der Medizintechnik sowie in der Sensortechnik erfolgen.

Auch können Glasfasern zur Erzeugung bzw. zur Verstärkung von Laserlicht verwendet und als aktive Glasfasern bezeichnet werden. Faserlaser zur Erzeugung von Laserlicht bzw. Faserverstärker zur Verstärkung von Laserlicht weisen hierzu abschnittsweise einen dotierten Faserkern (siehe unten) auf, welcher das aktive Medium des Faserlasers bzw. des Faserverstärkers, d.h. dessen aktive Glasfaser, bildet. Übliche Dotierungselemente des laseraktiven Faserkerns sind insbesondere Neodym, Ytterbium, Erbium, Thulium und Holmium. Faserlaser bzw. Faserverstärker werden unter anderem in der Industrie für Ultrakurzpulslasersysteme eingesetzt (zum Beispiel bei einer Wellenlänge von ca. 1 µm), in der Messtechnik (zum Beispiel bei LIDAR-Messungen - laser detection and ranging), in medizinischen Anwendungen (zum Beispiel bei einer Wellenlänge von ca. 2 µm) oder in Weltraumanwendungen (zum Beispiel bei einer Wellenlänge von ca. 1,5 µm).

Glasfasern, welche zur Verstärkung des Signallichts wie zum Beispiel der Laserstrahlung bei Faserverstärkern oder zur Erzeugung von Laserstrahlung bei Faserlasern verwendet werden, weisen üblicherweise einen Faserkern (Englisch: fiber core) auf, welcher aus reinem Glas wie zum Beispiel aus reinem Quarzglas besteht und im Fall von passiven Glasfasern häufig mit Germanium dotiert ist; bei aktiven Glasfasern wird üblicherweise eine Dotierung wie zuvor beschrieben verwendet. In bestimmten Fällen kann auch der Fasermantel dotiert sein; dies gilt für passive und für aktive Glasfasern. In Abhängigkeit von der Größe und der numerischen Apertur des Faserkerns kann man zwischen Single-Mode und Multi-Mode Glasfasern unterscheiden. Außerdem kann der Faserkern noch polarisationserhaltende Eigenschaften für das Licht aufweisen und daher als polarisationserhaltende Glasfasern (PM) bezeichnet werden. Auch kann es sich um photonische Kristallglasfasern sowie um Hollow-Core-Glasfasern handeln. Auch wenn sich das Haupanwendungsgebiet auf Glasfasern bezieht, können Polymerfasern oder Fasern aus anderen Materialien, zum Beispiel sogenannte Soft-Glass-Fibers für den mittleren IR Bereich, ebenfalls für derartige Anwendung(en) eingesetzt werden.

Der Faserkern wird üblicherweise radial von außen von wenigstens einem Fasermantel (Englisch: fiber cladding) umgeben, welcher üblicherweise in der Umfangsrichtung geschlossen ist und somit den Faserkern vollständig umgibt, von den beiden offenen Enden der Glasfaser abgesehen.

Üblicherweise werden sowohl passive Glasfasern als auch aktive Glasfasern von einer Faserbeschichtung (Englisch: fiber coating) aus zum Beispiel Polymer vergleichbar dem Fasermantel umgeben, welche dann der Glasfaser zugerechnet werden kann. Die Faserbeschichtung kann dem mechanischen Schutz des gläsernen Inneren der Glasfaser dienen sowie deren optische Eigenschaften beeinflussen. Üblicherweise dient bei Glasfasern, in denen das Licht ausschließlich im Faserkern geführt wird (Englisch: Single-Clad Glasfasern), die Faserbeschichtung primär dem mechanischen Schutz. Glasfasern, die Licht im Faserkern und im Fasermantel führen (Englisch: Double-Clad Glasfasern), sind üblicherweise mit einer Faserbeschichtung zur Erfüllung von mechanischen sowie von optischen Eigenschaften ausgeführt.

Zwei in der Praxis häufig vorkommende Querschnittsformen für den Fasermantel sind zylindrisch und oktogonal. Die oktogonale Form für den Fasermantel wird insbesondere bei aktiven Glasfasern eingesetzt.

Derartige Glasfasern können in großen Längen hergestellt werden und sind üblicherweise als Rollenwaren erhältlich. Der Durchmesser des Fasermantels variiert üblicherweise zwischen ca. 80 µm und ca. 1 mm. Besonders bei den größeren Faserdurchmessern wird in der Praxis häufig schon von Faserstäben gesprochen (Englisch: rod-type fiber).

Für einen Faserverstärker sind typischerweise vier wesentliche passive Faserkomponenten notwendig: ein Signallichtstrahlungseingang als Schnittstelle für die Einspeisung bzw. für die Einkopplung der zu verstärkenden Signallichtstrahlung als Eingangsstrahlung von außerhalb des Faserverstärkers, ein Pumplichtkoppler, welcher die Pumplichtstrahlung nahezu verlustfrei von der Pumplichtquelle in den Mantel der aktiven Glasfaser transportiert, eine Pumplichtfalle, welche nicht absorbiertes Pumplicht aus der aktiven Glasfaser aufnimmt bzw. aus dem Mantel der Glasfaser entfernt, und ein Signallichtstrahlungsausgang, welche die Ausgangsstrahlung formt und bzw. oder führt und hierdurch nach außerhalb des Faserverstärkers auskoppelt und zur Verfügung stellt. Der Signallichtstrahlungsausgang kann auch als Faseraustrittselement oder als Faseraustrittsoptik bezeichnet werden.

Bei einem Faserlaser werden üblicherweise ebenso ein Pumplichtkoppler, eine aktive Glasfaser, eine Pumplichtfalle und ein Signallichtstrahlungsausgang verwendet. Da hier keine Signallichtstrahlung von außerhalb zugeführt sondern die Laserstrahlung innerhalb des Faserresonators zwischen zwei Reflektoren bzw. Spiegelelementen erzeugt wird, entfällt der Signallichtstrahlungseingang.

Als Signallichtstrahlungsausgang bzw. als Faseraustrittselement kann in jedem Fall zum Beispiel ein optisches Fenster mit einer einseitigen Antireflexionsbeschichtung für die entsprechenden Wellenlängen oder eine Linse zur Kollimation der Ausgangsstrahlung dienen. Die Faseraustrittsoptik kann auch eine weitere Glasfaser sein, welche die Ausgangsstrahlung zu einem Bestimmungsort führt. Derartige Faseraustrittsoptiken werden dabei üblicherweise stoffschlüssig zum Beispiel durch Schweißen, auch Spleißen genannt, mit dem offenen Ende der Glasfaser verbunden. Hierdurch kann das Signallicht bzw. das Laserlicht direkt in die Faseraustrittsoptik zum Beispiel als optisches Fenster oder als Linse übergehen und von dort aus nach außerhalb zum Beispiel des Faserverstärkers bzw. Faserlasers austreten. Mittels des optischen Fensters bzw. mittels der Linse kann der Strahl des Signallichts bzw. des Laserlichts dabei aufgeweitet werden, d.h. seinen Querschnitt vergrößern und hierdurch seine Leistungsdichte reduzieren, was für bestimmte Anwendungen günstig bzw. erforderlich sein kann.

Es ist somit bekannt, eine einzelne Glasfaser stoffschlüssig mit einem einzelnen Faseraustrittselement zu verbinden, wie zuvor beschrieben. Für viele Anwendungen, zum Beispiel in der Materialbearbeitung oder in der Medizintechnik, ist es jedoch relevant, mehrere Laserstrahlen in einer möglichst räumlich kompakten und vor allem thermisch und mechanisch hochstabilen Anordnung am Einsatzort zu nutzen. Dies könnte man zum Beispiel in der Freistrahloptik mit einer beliebigen Anordnung von Mikrolinsen realisieren, aber hierdurch würde man die erheblichen Vorteile der Glasfasertechnologie verlieren.

Werden stattdessen mehrere Glasfasern mit jeweils einem einzelnen Faseraustrittselement miteinander kombiniert, so führt dies zu einem zusätzlichen Aufwand, um die Faseraustrittselemente zueinander anzuordnen und auszurichten, so dass die jeweiligen Signallichtstrahlen wie gewünscht zueinander austreten und genutzt werden können. Dies stellt gleichzeitig eine erhebliche Fehlerquelle bei der Montage dar, welche zu einem schlechten oder sogar unbrauchbaren Endprodukt führen kann. Auch vergrößert dies den Bauraum des Endprodukts zumindest im Bereich der Faseraustrittselemente. Ferner lassen sich gewisse Mindestabstände der einzelnen Glasfasern zueinander nicht vermeiden, welche der Größe der jeweiligen Faseraustrittselemente geschuldet sind, welche parallel zueinander angeordnet werden und gemeinsam das eigentliche Faseraustrittselement bilden.

Das US 6,819,858 B2 beschreibt eine geformte Halterung aus nichtkristallinem Polymermaterial, welche derart konfiguriert ist, dass sie einen Kanal zum Halten eines Siliziumchips mit einer Vielzahl von nebeneinander liegenden V-Nuten aufweist, die in einer oberen Fläche zwischen rechten und linken Seitenabschnitten davon gebildet sind, wobei ein ausgesparter Bereich in dem Kanal hinter dem Chip zur Aufnahme einer Faserpufferbeschichtung vorgesehen ist und eine Kerbe in einem oberen Abschnitt der Halterung zwischen dem Kanal und einem Seitenabschnitt davon gebildet ist, um Verstärkungsfasern eines optischen Faserkabels zu halten, wobei die V-Nut so konfiguriert ist, dass sie jeweils einzelne optische Fasern darin aufnimmt. Zwei solche geformten Halterungen mit Siliziumchips sind sicher zusammengeschichtet, wobei die V-Nut der Chips einander gegenüberliegen, um die optischen Fasern dazwischen zu halten.

Das US 6,978,073 B2 beschreibt ein optisches Faserarray umfassend ein Ausrichtungssubstrat, eine Vielzahl von Ferrulelementen und eine Vielzahl von optischen Fasern. Das Ausrichtungssubstrat hat eine Vielzahl von Führungslöchern, die zweidimensional angeordnet sind und sich durch das Substrat erstrecken. Die Ferrule werden jeweils in der gleichen Richtung in die Führungslöcher eingesetzt und haben Durchgangslöcher in den zentralen Abschnitten. Die optischen Fasern werden in die jeweiligen Durchgangslöcher eingepasst und gehalten. Das Führungsloch wird zu einer zylindrischen Form geformt, deren Durchmesser im Wesentlichen dem Außendurchmesser der Ferrule entspricht. Die Lichteintritts-/Austrittsstirnfläche der optischen Faser ist an einer Stirnfläche der Ferrule freiliegend.

Nachteilig bei den beiden zuvor beschriebenen Druckschriften ist deren mechanisch formschlüssiger und bzw. oder kraftschlüssiger Halt der einzelnen Glasfasern, welcher im Vergleich zu dem zuvor beschriebenen stoffschlüssigen Schweißen bzw. Spleißen als weniger stabil, definiert und bzw. oder langlebig angesehen werden kann. Auch können durch die mechanischen Kräfte dieser Verbindungen mechanische Spannungen innerhalb der gehaltenen Glasfasern erzeugt werden, welche das optische Übertragungsverhalten der Glasfasern beeinflussen können. Dies kann insbesondere undefiniert erfolgen und störend auf die Signallichtübertragung wirken.

Nachteilig ist hieran ferner, dass bei dieser Vorgehensweise die freien Enden der Glasfasern, welche die Grenzfläche zwischen dem Material der Glasfaser wie zum Beispiel Glas und der Umgebung wie zum Beispiel Luft bilden, bei der Übertragung von mittleren und hohen optischen Leistungen von einigen Watt bis einigen Kilo-Watt leicht beschädigt oder zerstört werden können.

Die US 2012/045169 A1 beschreibt ein Verfahren und eine Vorrichtung zum Bilden einer Lichtleitfaser-Array-Baugruppe, das umfasst: Bereitstellen einer Vielzahl von Lichtleitfasern einschließlich einer ersten Lichtleitfaser und einer zweiten Lichtleitfaser, Bereitstellen einer Faserarray-Platte, die eine erste Oberfläche und eine zweite Oberfläche umfasst, Verbinden der Vielzahl von Lichtleitfasern mit der ersten Oberfläche der Faserarray-Platte, Übertragen einer Vielzahl von optischen Signalen durch die Lichtleitfasern in die Faserarray-Platte an der ersten Oberfläche der Faserarray-Platte, und Emittieren eines zusammengesetzten Ausgangsstrahls mit Licht aus der Vielzahl von optischen Signalen von der zweiten Oberfläche der Faserarray-Platte. Bei einigen Ausführungen ist die Mehrzahl der optischen Fasern stumpf an die erste Oberfläche der Faseranordnungsplatte geschweißt.

Nachteilig bei der Verbindung des offenen Endes wenigstens einer Glasfaser mit einem optischen Element einer Faseraustrittsoptik ist, dass sowohl bei einem Verkleben mittels eines zusätzlichen Klebstoffs als auch beim Verschmelzen bzw. Verschweißen der Materialien der Glasfaser und des optischen Elementes jeweils Material zwischen das offene Ende der Glasfaser und der Eintrittsfläche des optischen Elementes gelangen kann. Dies kann zu Störungen bei der Einkopplung bzw. Übertragung der Signallichtstrahlung aus dem Kern der Glasfaser in das optische Element an dessen Eintrittsfläche führen.

Wird zur Vermeidung dieser Nachteile das offene Ende stumpf auf die Eintrittsfläche des optischen Elementes aufgesetzt und randseitig durch Verkleben mittels eines zusätzlichen Klebstoffs oder durch Verschmelzen bzw. Verschweißen der Materialien der Glasfaser und des optischen Elementes miteinander stoffschlüssig verbunden, so kann lediglich eine vergleichsweise mechanisch schwache Verbindung zwischen dem offenen Ende der Glasfaser und dem optischen Element an dessen Eintrittsfläche erreicht werden.

Auch kann sich die Ausrichtung des offenen Endes der Glasfaser gegenüber der Eintrittsfläche des optischen Elements bei ungleichmäßiger Klebung bzw. Verschweißung gegen dem stumpfen, d.h. senkrechten, Aufsetzen ändern, was sich entsprechend auf die Ausbreitung des Signallichts der Glasfaser durch das optische Element hindurch auswirken und sogar zur Unbrauchbarkeit der hergestellten Komponente führen.

Nachteilig ist ferner, dass die Eintrittsfläche sowie weitere Flächen des optischen Elements außen dessen Austrittfläche optisch angeraut sein können. Dies kann dazu dienen, um Störlichtstrahlung im optischen Element, zum Beispiel aus dem Mantel der Glasfasern oder reflektiertes Signallichtstrahlung von der Austrittsfläche des optischen Elements, aus dem optischen Element zu extrahieren oder diffus zu reflektieren. Die Reduzierung derartiger Störlichtstrahlung kann insbesondere bei höheren optischen Leistungen für die Umsetzbarkeit der jeweiligen Anwendung bzw. der Reduzierung der Störanfälligkeit des Lasersystems zwingend notwendig sein. Wird auf eine derart optisch angeraute Eintrittsfläche das offene Ende der Glasfaser aufgesetzt und dort randseitig stoffschlüssig verbunden, so kann hierdurch der Übergang der Signallichtstrahlung von dem Kern der Glasfaser in das optische Element hinein ebenfalls von der angerauten Oberfläche beeinträchtigt werden. Die Beeinträchtigungen können sich zum Beispiel auf die Signaltransmission an der Verbindungsstelle, die Strahlqualität oder die Polarisation der Signallichtstrahlung signifikant auswirken. Bei mittleren und hohen optischen Leistungen kann sogar eine Zerstörung des kompletten optischen Elementes als Faseranordnung (Faserarrayplatte) und der angebundenen Lasersysteme erfolgen. Wird daher auf die angeraute Eintrittsfläche verzichtet, so können die Vorteile einer angerauten Oberfläche zumindest bei der Eintrittsfläche des optischen Elements nicht genutzt werden.

Eine Aufgabe der vorliegenden Erfindung ist es, ein Faseraustrittselement der eingangs beschriebenen Art bereit zu stellen, welches die Vorteile der Glasfasertechnologie nutzen und gleichzeitig die zuvor beschriebenen Nachteile überwinden oder zumindest reduzieren kann. Insbesondere soll eine räumlich möglichst kompakte Anordnung von mehreren Glasfasern im Bereich des Faseraustrittselements ermöglicht werden. Zusätzlich oder alternativ soll eine möglichst hohe mechanische Stabilität der Verbindung zwischen Glasfaser bzw. Glasfasern und optischem Element des Faseraustrittselements erreicht werden. Zusätzlich oder alternativ soll ein möglichst ungestörter Übergangs des Signallichts von der Glasfaser in das optische Element des Faseraustrittselements erreicht werden. Zusätzlich oder alternativ sollen die Gestaltungsmöglichkeiten von mehreren Glasfasern im Bereich des Faseraustrittselements erhöht werden. Zumindest soll eine Alternative zu bekannten Faseraustrittselementen geschaffen werden.

Die Aufgabe wird erfindungsgemäß durch ein Faseraustrittselement mit den Merkmalen des Patentanspruchs 1 gelöst. Vorteilhafte Weiterbildungen sind in den Unteransprüchen beschrieben.

Somit betrifft die vorliegende Erfindung ein Faseraustrittselement mit einer Mehrzahl von Glasfasern mit jeweils wenigstens einem Kern, welcher jeweils ausgebildet ist, eine Signallichtstrahlung zu führen, welche insbesondere eine Laserstrahlung sein kann. Das Faseraustrittselement kann auch als Signallichtstrahlungsausgang, als Faseraustrittsoptik oder als Faserarray bezeichnet werden. Das Faseraustrittselement weist ferner wenigstens ein optisches Element, vorzugsweise ein optisches Fenster, eine optische Linse, einen optischen Strahlteiler oder ein optisches Prisma, auf, welches mit jeweils einem offenen Ende der Kerne der Glasfasern verbunden und ausgebildet ist, die Signallichtstrahlung von den offenen Enden der Kerne der Glasfasern zu erhalten und als Austrittsstrahlungen über wenigstens eine Austrittsfläche nach außerhalb abzugeben. Mit anderen Worten weist jede der Glasfasern wenigstens zwei Enden auf, von denen jeweils ein Ende wie zuvor beschrieben gemeinsam mit den entsprechenden Enden der übrigen Glasfasern mit demselben optischen Element verbunden ist.

Das Faseraustrittselement ist dadurch gekennzeichnet, dass die offenen Enden der Kerne der Glasfasern, vorzugsweise ferner die offenen Enden von die Kerne im Wesentlichen umschließenden Mänteln der Glasfasern, mit jeweils einer Eindringtiefe, vorzugsweise gegenüber einer Eintrittsfläche des optischen Elements, innerhalb des Materials des optischen Elements angeordnet sind, wobei wenigstens das Material der offenen Enden der Kerne der Glasfasern, vorzugsweise ferner das Material der offenen Enden der Mäntel der Glasfasern, mit dem Material des optischen Elements verschmolzen ist.

Mit anderen Worten werden die offenen Enden wenigstens der Kerne der Glasfasern und vorzugsweise zusätzlich deren Mäntel innerhalb des Materials des optischen Elements angeordnet und dort mit dem Material des optischen Elements stoffschlüssig durch Verschmelzen der Materialien miteinander verbunden und gehalten. Hierdurch können beim Übergang der Signallichtstrahlung vom jeweiligen Kern der Glasfaser in das optische Element hinein die optischen Eigenschaften der Signallichtstrahlung erhalten bleiben. Auch kann auf diese Art und Weise die mechanische Stabilität der Verbindung der offenen Enden der Glasfasern bzw. deren Kerne bzw. deren Mäntel gegenüber dem optischen Element verbessert werden. Das optische Element dient dabei neben der Strahlführung der Signallichtstrahlung durch sein Form und bzw. oder seine Materialeigenschaften auch zur Strahlformung der Austrittsstrahlungen bzw. des hieraus kombinierten Austrittsstrahls.

Zur Herstellung einer derartigen stoffschlüssige Verbindung kann das Material des optischen Elements zumindest in diesem Bereich durch Erwärmen aufgeschmolzen werden, sodass die offenen Enden der Glasfasern in das aufgeschmolzen Material des optischen Elements eingetaucht werden und das aufgeschmolzen Material des optischen Elements dann wieder erkalten bzw. erstarren kann.

Die Eindringtiefe der Glasfasern in das Material des optischen Elements hinein kann dabei je nach Anwendungsfall derart gewählt werden, dass die zuvor beschriebenen Eigenschaften und Vorteile in Abhängigkeit der Materialien sowie Formen der Glasfasern sowie des optischen Elements erreicht werden können. Die Eindringtiefe der Glasfasern in das Material des optischen Elements kann dabei vorzugsweise relativ zu einer Eintrittsfläche des optischen Elements zu verstehen sein, wobei die Eintrittsfläche des optischen Elements diejenige Außenfläche des optischen Elements ist, über welche die Glasfasern das optische Element erreichen und in dessen Material eindringen. Mittels der Eindringtiefe können auch die Austrittsstrahlungen, welche auch als ein kombinierter Austrittsstrahl betrachtet werden können, in seinen optischen Eigenschaften beeinflusst werden. Der Eindringtiefe ist dabei derart bemessen, so dass das offene Ende innerhalb des Materials des optischen Elements angeordnet und senkrecht zur länglichen Erstreckungsrichtung der Glasfasern seitlich umschlossen ist. Die Eindringtiefe ist vorzugsweise wenigstens so groß wie der Durchmesser des Kerns, vorzugsweise des Mantels, des offenen Endes der Glasfasern und bzw. oder bzw. tiefer als die maximale Strukturtiefe einer optisch rauen bzw. optisch angerauten Oberfläche.

Gemäß einem Aspekt der Erfindung ist das optische Element im Bereich einer Eintrittsfläche mit wenigstens einigen, vorzugsweise mit allen, offenen Enden der Kerne der Glasfasern, vorzugsweise ferner mit den offenen Enden von die Kerne im Wesentlichen umschließenden Mänteln der Glasfasern, verbunden, wobei das optische Element von der Eintrittsfläche hin zur Austrittsfläche sich zumindest abschnittsweise, vorzugsweise vollständig, vorzugsweise stufenförmig oder durchgängig, zunehmend verbreiternd ausgebildet ist. Mit anderen Worten ist die Eintrittsfläche des optischen Elements kleiner als dessen Austrittsfläche bzw. der Querschnitt des optischen Elements vergrößert sich von der Eintrittsfläche zur Austrittsfläche hin. Der Übergang der Eintrittsfläche zur Austrittsfläche kann dabei durchgängig gradlinig oder auch stufenförmig, zum Beispiel in Form von rechteckigen Absätzen aber auch als Wellenform, sein.

Vorteilhaft ist hierbei zum einen, dass Störstrahlungen innerhalb des optischen Elements häufiger in Kontakt mit der Seitenfläche bzw. Mantelfläche bzw. mit den Seitenflächen bzw. Mantelflächen des optischen Elements treten, wodurch die Extraktion der Störstrahlungen aus dem optischen Element heraus verbessert werden kann. Zum anderen kann die Eintrittsfläche des optischen Elements verkleinert und hierdurch der Fläche der zuvor schmelzenden Glasfasern angeglichen werden, wodurch das Volumen reduziert werden kann, welches seitens des optischen Elements zum Verschmelzen zu erwärmen ist. Dies kann den Vorgang des Verschmelzens vereinfachen, beschleunigen und bzw. oder die hierfür erforderliche Energie reduzieren.

Auch kann hierdurch Material zur Ausbildung des optischen Elements gespart und bzw. oder der erforderliche Bauraum des optischen Elements geringgehalten werden. Ferner können hierdurch Möglichkeiten zur Verfügung gestellt werden, die Ausbreitung der Signalstrahlungen innerhalb des optischen Elements sowie die Austrittsstrahlungen zu beeinflussen.

Gemäß einem weiteren Aspekt der Erfindung sind die Eintrittsfläche und die Austrittsfläche des optischen Elements parallel oder winkelig zueinander ausgerichtet. Hierdurch kann die Ausbreitung der Signalstrahlungen innerhalb des optischen Elements sowie die Austrittsstrahlungen beeinflusst werden. Dabei kann eine parallele Ausrichtung der Eintrittsfläche und der Austrittsfläche des optischen Elements die Herstellung des optischen Elements vereinfachen und hierdurch dessen Kosten reduzieren. Durch eine winkelige Ausrichtung der Austrittsfläche gegenüber der Eintrittsfläche des optischen Elements können Rückreflexe der Signallichtstrahlung aus dem optischen Element in die Glasfasern zurück reduziert werden. Auch können die Austrittsstrahlungen an der Austrittsfläche des optischen Elements gezielt hierdurch abgelenkt und die Länge des jeweiligen Strahlengangs beeinflusst werden.

Gemäß einem weiteren Aspekt der Erfindung ist wenigstens die Eintrittsfläche des optischen Elements, vorzugsweise sind alle Außenflächen des optischen Elements außer der Austrittfläche des optischen Elements, optisch angeraut ausgebildet und wenigstens die Austrittfläche des optischen Elements, vorzugsweise genau die Austrittfläche des optischen Elements, ist mit optisch glatter Oberflächenqualität ausgebildet. Eine optisch angeraute Oberfläche kann beispielsweise mittels einer Bearbeitung mit einem mechanischen Werkzeug wie zum Beispiel durch Schleifen aber auch mittels eines Laserstrahls als Werkzeug erfolgen. Eine optisch glatt ausgebildete Oberfläche kann ebenfalls mittels einer Bearbeitung mit einem mechanischen Werkzeug wie zum Beispiel durch Polieren aber auch mittels eines Laserstrahls als Werkzeug erfolgen. Eine optisch glatte Oberflächenqualität ist gegeben, wenn bei der entsprechenden Wellenlänge bzw. bei dem entsprechenden Wellenlängenbereich der Signallichtstrahlung die notwendigen optischen Eigenschaften beim Austritt über die Austrittsfläche für die jeweilige Anwendung größtenteils erhalten werden können bzw. eine entsprechende optische Beschichtung fachgerecht aufgebracht werden kann. Häufig wird zur Bewertung der Oberflächenqualität unter anderem die Scratch-Dig-Spezifikation der Norm MIL-PRF-13830B herangezogen.

Eine optisch angeraute Oberfläche des optischen Elements kann für dessen Außenflächen außer der Austrittsfläche vorteilhaft sein, um Störstrahlungen aus dem optischen Element austreten zu lassen und hierdurch im Volumen des optischen Elements zu reduzieren. Ein derartiges Störlicht kann Mantellicht aus dem Mantel der Glasfasern sein. Auch kann es an den Seitenflächen des optischen Elements zu Reflexion der Signalstrahlungen kommen. Außerdem kann Signallichtstrahlung im optischen Element an der Austrittsfläche teilweise in Form von Störlicht reflektiert werden. Ferner kann Signallichtstrahlung durch Reflexion von außen, zum Beispiel vom Bearbeitungs- oder Anwendungsort der Signallichtstrahlung, erneut ins optische Element gelangen. Zur Reduzierung der genannten Störlichtstrahlungen im optischen Element und damit zur Gewährleistung eines sicheren Betriebszustandes kann wie bereits erwähnt eine optisch angeraute Oberfläche vorteilhaft sein.

Gemäß einem weiteren Aspekt der Erfindung weist das optische Element, vorzugsweise eine Eintrittsfläche des optischen Elements, wenigstens eine Vertiefung mit einer Tiefe auf, wobei wenigstens einige, vorzugsweise alle, der offenen Enden der Kerne der Glasfasern, vorzugsweise ferner das Material von die Kerne im Wesentlichen umschließenden Mänteln der Glasfasern, mit der Eindringtiefe gegenüber der Vertiefung innerhalb des Materials des optischen Elements angeordnet sind.

Mit anderen Worten können die offenen Enden der Glasfasern auf diese Art und Weise tiefer in das Material des optischen Elements eingebracht werden, ohne hierfür die Eindringtiefe zu erhöhen. Stattdessen wird die Tiefe der Vertiefung der Eintrittsfläche des optischen Elements zum Beispiel durch eine vorangehende Laserbearbeitung oder Fräsbearbeitung derart tief vorgesehen, dass die offenen Enden der Glasfasern zusätzlich um die Eindringtiefe in das Material des optischen Elements zum Beispiel durch Schmelzen eingebracht werden können. Der Gesamtabstand der offenen Enden der Glasfasern gegenüber der Eintrittsfläche des optischen Elements ergibt sich somit aus der Addition der Tiefe der Vertiefung sowie der Eindringtiefe und kann entsprechend einfach erhöht werden.

Gemäß einem weiteren Aspekt der Erfindung weist wenigstens die eine Austrittfläche des optischen Elements zumindest abschnittsweise, vorzugsweise vollflächig, eine optische Beschichtung, vorzugsweise eine optische Anti-Reflektionsbeschichtung, auf. Hierdurch kann der Übergang von Strahlung durch die Austrittsfläche aus dem optischen Element hinaus und bzw. oder von der Seite der Austrittsfläche in das optische Element hinein beeinflusst werden. Insbesondere kann durch eine optische Anti-Reflektionsbeschichtung das Eindringen von Störstrahlung von außerhalb des optischen Elements verhindert oder zumindest reduziert werden. Eine derartige Beschichtung kann entsprechend gewählt werden, um die relevanten Wellenlängen bzw. Wellenlängenbereiche zu reflektieren. Dies kann das Maß von Störstrahlung innerhalb des optischen Elements reduzieren.

Erfindungsgemäß weist wenigstens eine, vorzugsweise weisen einige, besonders vorzugsweise alle, der Glasfasern wenigstens einen Mantel auf, welcher den Kern im Wesentlichen umschließt, wobei im Bereich des Faseraustrittselements wenigstens eine Pumplichtfalle, vorzugsweise als Vertiefungen, in dem Material des Mantels der Glasfaser ausgebildet ist, um Mantellicht aus dem Mantel der Glasfaser nach außerhalb der Glasfaser abzuführen. Eine derartige Pumplichtfalle kann auch als Mantellichtentferner oder als Cladding-Light-Stripper bezeichnet werden. Hierdurch kann störendes Mantellicht unmittelbar vor dem optischen Element aus den Mänteln der Glasfasern entfernt und bzw. oder rücklaufendes Mantellicht vom optischen Element reduziert werden. Dies kann den Eintrag von Störstrahlungen in das optische Element reduzieren.

Vorzugsweise ist die Pumplichtfalle im Bereich des Faseraustrittselements zusätzlich zu wenigstens einer Pumplichtfalle im vorangehenden Verlauf der Glasfaser außerhalb des Bereich des Faseraustrittselements ausgebildet.

Gemäß einem weiteren Aspekt der Erfindung weist das Faseraustrittselement wenigstens ein Spannungselement im Bereich des Faseraustrittselements auf, welches ausgebildet ist, eine mechanische Spannung, vorzugsweise in Form von Zugkräften, Druckkräften, Biegekräften und bzw. oder Scherkräften, auf wenigstens den Kern einer, vorzugsweise einiger, besonders vorzugsweise aller, der Glasfasern, vorzugsweise und auf einen den Kern im Wesentlichen umschließenden Mantel der Glasfaser, über einen vorbestimmten Abschnitt der länglichen Erstreckung der Glasfasern auszuüben. Auf diese Art und Weise kann die Übertragung der Signallichtstrahlung innerhalb des Kerns der jeweiligen Glasfaser gezielt beeinflusst werden. Der Bereich des Faseraustrittselements umfasst dabei wenigstens den Bereich zum Beispiel innerhalb eines Gehäuses des Faseraustrittselements sowie auch einen Bereich außerhalb des Gehäuses des Faseraustrittselements im direkten Anschluss hieran.

Gemäß einem weiteren Aspekt der Erfindung ist das offene Ende des Kerns wenigstens einer, vorzugsweise einiger, besonders vorzugsweise aller, der Glasfasern gegenüber einer Eintrittsfläche des optischen Elements wenigstens in einem ersten Winkel angeordnet, wobei der erste Winkel 90° oder verschieden zu 90° ist, wobei vorzugsweise die offenen Enden der Kerne einiger, vorzugsweise aller, der Glasfasern den gleichen ersten Winkel oder unterschiedliche erste Winkel aufweisen. In jedem Fall können durch die Orientierung der offenen Enden der Glasfasern gegenüber der Eintrittsfläche des optischen Elements die Ausbreitungsrichtungen der Signalstrahlungen innerhalb des optischen Elements beeinflusst werden. Eine senkrechte Anordnung der Glasfasern gegenüber der Eintrittsfläche kann dabei die Herstellung vereinfachen. Durch eine winkelige Ausrichtung der Glasfasern gegenüber der Eintrittsfläche kann die Ausbreitung der Signallichtstrahlung entsprechend gestaltet werden. Insbesondere kann die optische Wegstrecke, welche die Signalstrahlungen innerhalb des optischen Elements durchlaufen, erhöht werden, ohne das optische Element hierzu vergrößern zu müssen.

Gemäß einem weiteren Aspekt der Erfindung ist das offene Ende des Kerns wenigstens einer, vorzugsweise einiger, besonders vorzugsweise aller, der Glasfasern gegenüber einer Eintrittsfläche des optischen Elements ferner in einem zweiten Winkel angeordnet, wobei der zweite Winkel 90° oder verschieden zu 90° ist, wobei vorzugsweise die offenen Enden der Kerne einiger, vorzugsweise aller, der Glasfasern den gleichen zweiten Winkel oder unterschiedliche zweite Winkel aufweisen und bzw. oder wobei vorzugsweise der erste Winkel und der zweite Winkel gleich oder unterschiedlich sind. Dabei sind die beiden Winkel vorzugsweise senkrecht zueinander orientiert. Dies kann die Gestaltungsmöglichkeiten weiter erhöhen.

Gemäß einem weiteren Aspekt der Erfindung sind wenigstens einige, vorzugsweise alle, der offenen Enden der Kerne der Glasfasern, vorzugsweise ferner die offenen Enden von die Kerne im Wesentlichen umschließenden Mänteln der Glasfasern, mit jeweils der gleichen Eindringtiefe oder mit jeweils einer unterschiedlichen Eindringtiefe innerhalb des Materials des optischen Elements angeordnet. Die Verwendung der gleichen Eindringtiefe kann die Herstellung vereinfachen. Durch die Variation der Eindringtiefe zwischen einzelnen Glasfasern können die Austrittsstrahlungen bzw. ein hieraus kombinierter Austrittstrahl in seinen optischen Eigenschaften beeinflusst werden. Mit anderen Worten können die Signallichtstrahlungen der einzelnen Glasfasern aufgrund ihrer unterschiedlichen Eindringtiefe in das optische Element dort unterschiedlich lange optische Wegstrecken durchlaufen und somit an der Austrittsfläche des optischen Elements unterschiedliche optische Eigenschaften wie zum Beispiel unterschiedliche Strahldurchmesser aufweisen.

Gemäß einem weiteren Aspekt der Erfindung weist wenigstens eine, vorzugsweise einige, besonders vorzugsweise alle, der Glasfasern um die Achse ihrer länglichen Erstreckung eine Ausrichtbarkeit auf und ist in einer bevorzugten Ausrichtung angeordnet. Mit anderen Worten ist wenigstens eine der Glasfasern nicht rotationssymmetrisch ausgebildet sondern weist zum Beispiel aufgrund ihres Querschnitts, zum Beispiel als eckiger Querschnitt, die Möglichkeit auf, durch Drehung bzw. durch Ausrichtung um die Achse ihrer länglichen Erstreckung unterschiedlich gegenüber dem optischen Element ausgerichtet zu werden. Dies kann zusätzlich oder alternativ auch bei polarisationserhaltende Glasfasern und bzw. oder bei Glasfasern mit Stresskernen der Fall sein. Durch die Ausrichtung können gezielt bestimmte optische Eigenschaften der Signalausgangsstrahlung erreicht werden, was die Gestaltungsmöglichkeiten der Austrittstrahlungen erhöhen kann.

Gemäß einem weiteren Aspekt der Erfindung sind wenigstens einige, vorzugsweise alle, der offenen Enden der Kerne der Glasfasern zueinander linienförmig, V-förmig, kreisförmig, halbkreisförmig, bogenförmig, bündelförmig, hohlzylinderförmig oder rechteckig angeordnet. Dies kann die Gestaltungsmöglichkeiten der Austrittstrahlungen erhöhen.

Gemäß einem weiteren Aspekt der Erfindung ist wenigstens das offene Ende des Kerns einer der Glasfasern einen Mittelpunkt eines Kreises bildend angeordnet, wobei wenigstens einige, vorzugsweise alle, der offenen Enden der Kerne der Glasfasern kreisförmig um den Mittelpunkt des Kreises angeordnet sind, wobei vorzugsweise wenigstens ein radial innerer Kreis und ein radial äußerer Kreis gebildet werden und oder wobei vorzugsweise alle der offenen Enden der Kerne der Glasfasern, vorzugsweise alle der die Kerne im Wesentlichen umschließenden Mäntel der Glasfasern, zueinander gleich oder unterschiedlich beabstandet oder einander berührend angeordnet sind. Hierdurch kann ein entsprechend geformter kombinierter Strahl der Ausgangsstrahlungen erreicht werden. Die Glasfasertypen, -formen und -durchmesser können dabei innerhalb des Faseraustrittselements variieren.

Gemäß einem weiteren Aspekt der Erfindung sind wenigstens einige, vorzugsweise alle, der offenen Enden der Kerne der Glasfasern, vorzugsweise alle der die Kerne im Wesentlichen umschließenden Mäntel der Glasfasern, zueinander gleich oder unterschiedlich beabstandet oder einander berührend angeordnet. Dies kann die Gestaltungsmöglichkeiten der Austrittstrahlungen erhöhen.

Gemäß einem weiteren Aspekt der Erfindung weisen wenigstens einige, vorzugsweise alle, der Kerne der Glasfasern, vorzugsweise und bzw. oder einige, vorzugsweise alle, die Kerne im Wesentlichen umschließenden Mäntel der Glasfasern, zumindest im Bereich des Faseraustrittselements in ihrer länglichen Erstreckungsrichtung einen gleichbleibenden oder unterschiedlichen Durchmesser und bzw. oder einen gleichbleibenden oder unterschiedlichen Querschnitt auf. Dies kann die Gestaltungsmöglichkeiten der Ausgangsstrahlungen erhöhen.

Dabei können durch Ätzen vor dem Schweißprozess die Durchmesser der Glasfasern bzw. deren Mäntel gezielt reduziert werden, so dass zum Beispiel die Kerne der Glasfasern im optischen Element räumlich näher aneinander gebracht werden können. Auch durch Tapern können die Durchmesser der einzelne Glasfasern reduziert werden, was auch zu den vorher beschreiben geometrischen Vorteilen führen kann. Zusätzlich kann beim Tapern noch der Modenfelddurchmesser des Signals vor dem Schweißprozess modifiziert werden, um gewünschte Eigenschaften des kombinierten Austrittsstrahls zu erzielen.

Gemäß einem weiteren Aspekt der Erfindung weisen wenigstens einige, vorzugsweise alle, der Kerne der Glasfasern, vorzugsweise und bzw. oder einige, vorzugsweise alle, die Kerne im Wesentlichen umschließenden Mäntel der Glasfasern, das gleiche oder unterschiedliche Materialien und bzw. oder den gleichen oder unterschiedliche Durchmesser und bzw. oder den gleichen oder unterschiedliche Querschnitte, vorzugsweise kreisrund, rechteckig, quadratisch oder oktogonal, auf. Hiervon ist vorzugsweise auch umfasst, dass Single-Mode Glasfasern, Large-Mode Area Glasfasern, Multi-Mode-Glasfasern, polarisationserhaltende Glasasfern, photonische Kristallglasfasern und Multikern-Glasfasern verwendet werden können. Dies kann die Gestaltungsmöglichkeiten der Ausgangsstrahlungen erhöhen.

Die vorliegende Erfindung betrifft auch ein Verfahren zur Herstellung eines Faseraustrittselements, vorzugsweise wie zuvor beschrieben, mit wenigstens den Schritten:
- Bereitstellen einer Mehrzahl von Glasfasern mit jeweils wenigstens einem Kern, welcher jeweils ausgebildet ist, eine Signallichtstrahlung zu führen,
- Bereitstellen wenigstens eines optischen Elements, vorzugsweise eines optischen Fensters, einer optischen Linse, eines optischen Strahlteilers oder eines optischen Prismas, welches ausgebildet ist, die Signallichtstrahlung von den offenen Enden der Kerne der Glasfasern zu erhalten und als Austrittsstrahlungen über wenigstens eine Austrittsfläche nach außerhalb abzugeben,
- Ausrichten wenigstens eines ersten Bearbeitungsstrahls auf wenigstens eine Bearbeitungszone des optischen Elements,
- Erwärmen wenigstens der Bearbeitungszone des optischen Elements mittels wenigstens des ersten Bearbeitungsstrahls derart, dass das Material des optischen Elements wenigstens in der Bearbeitungszone eine ausreichende Fließfähigkeit aufweist, um die offenen Enden der Kerne der Glasfasern, vorzugsweise ferner die offenen Enden von die Kerne im Wesentlichen umschließenden Mänteln der Glasfasern, in sich aufzunehmen, und
- Bewegen wenigstens der Glasfasern und bzw. oder des optischen Elements derart aufeinander zu, so dass die offenen Enden der Kerne der Glasfasern, vorzugsweise ferner die offenen Enden der Mäntel der Glasfasern, in der Bearbeitungszone des optischen Elements mit einer Eindringtiefe in das Material des optischen Elements eindringen und wenigstens das Material der offenen Enden der Kerne der Glasfasern, vorzugsweise ferner das Material der offenen Enden der Mäntel der Glasfasern, mit dem Material des optischen Elements verschmolzen wird.

Auf diese Art und Weise kann ein entsprechendes Faseraustrittselement, vorzugsweise wie zuvor beschrieben, hergestellt werden, um die entsprechenden und vorzugsweise die zuvor beschriebenen Eigenschaften und Vorteile umzusetzen.

Gemäß einem Aspekt der Erfindung weist das Verfahren wenigstens den weiteren Schritt auf:
- Einbringen wenigstens einer Vertiefung mit einer Tiefe in das optische Element, vorzugsweise in eine Eintrittsfläche des optischen Elements,
wobei die Bearbeitungszone des optischen Elements die Vertiefung des optischen Elements umfasst, vorzugsweise die Vertiefung des optischen Elements zumindest im Wesentlichen in der Mitte der Bearbeitungszone des optischen Elements angeordnet ist.

Gemäß einem weiteren Aspekt der Erfindung weist wenigstens eine, vorzugsweise einige, besonders vorzugsweise alle, der Glasfasern wenigstens einen Mantel auf, welcher den Kern im Wesentlichen umschließt, wobei das Verfahren wenigstens den weiteren Schritt aufweist:
- Einbringen wenigstens einer Pumplichtfalle, vorzugsweise als Vertiefungen, in das Material des Mantels der Glasfaser im Bereich des Faseraustrittselements, welche ausgebildet ist, um Mantellicht aus dem Mantel der Glasfaser nach außerhalb der Glasfaser abzuführen.

Gemäß einem weiteren Aspekt der Erfindung weist das Verfahren wenigstens den weiteren Schritt auf:
- Anordnen wenigstens eines Spannungselements im Bereich des Faseraustrittselements, welches ausgebildet ist, eine mechanische Spannung, vorzugsweise in Form von Zugkräften, Druckkräften, Biegekräften und bzw. oder Scherkräften, auf wenigstens den Kern einer, vorzugsweise einiger, besonders vorzugsweise aller, der Glasfasern, vorzugsweise und auf wenigstens einen den Kern im Wesentlichen umschließenden Mantel der Glasfaser, über einen vorbestimmten Abschnitt der länglichen Erstreckung der Glasfaser auszuüben.

Gemäß einem weiteren Aspekt der Erfindung weist das Verfahren wenigstens den weiteren Schritt auf:
- Ausrichten des offenen Endes des Kerns wenigstens einer, vorzugsweise einiger, besonders vorzugsweise aller, der Glasfasern gegenüber einer Eintrittsfläche des optischen Elements wenigstens in einem ersten Winkel, vorzugsweise ferner in einem zweiten Winkel,
wobei der erste Winkel, vorzugsweise und bzw. oder der zweite Winkel, 90° oder verschieden zu 90° ist, wobei vorzugsweise die offenen Enden der Kerne einiger, vorzugsweise aller, der Glasfasern den gleichen ersten Winkel, vorzugsweise und bzw. oder den gleichen zweiten Winkel, oder unterschiedliche erste Winkel, vorzugsweise und bzw. oder unterschiedliche zweite Winkel, aufweisen, wobei vorzugsweise der erste Winkel und der zweite Winkel gleich oder unterschiedlich sind.

Gemäß einem weiteren Aspekt der Erfindung weist das Verfahren wenigstens den weiteren Schritt auf:
- Ausrichten wenigstens einer, vorzugsweise einiger, besonders vorzugsweise aller, der Glasfasern um die Achse ihrer länglichen Erstreckung.

Die vorliegende Erfindung betrifft auch eine Bearbeitungsvorrichtung zur Herstellung eines Faseraustrittselements, vorzugsweise wie zuvor beschrieben, vorzugsweise mittels eines Verfahrens wie zuvor beschrieben, mit wenigstens einer Aufnahmeeinheit zur Aufnahme einer Mehrzahl von Glasfasern, mit jeweils wenigstens einem Kern, welcher ausgebildet ist, eine Signallichtstrahlung zu führen, wenigstens einer Aufnahmeeinheit zur Aufnahme wenigstens eines optischen Elements, welches ausgebildet ist, die Signallichtstrahlung von den offenen Enden der Kerne der Glasfasern zu erhalten und als Austrittsstrahlung über eine Austrittsfläche nach außerhalb abzugeben, und wenigstens einer ersten Bearbeitungsstrahlquelle, vorzugsweise einer ersten Laserstrahlquelle, besonders vorzugsweise einer ersten CO2-Laserstrahlquelle, welche ausgebildet ist, einen ersten Bearbeitungsstrahl zu erzeugen und direkt oder indirekt mittels eines ersten beweglichen Ausrichtelements, vorzugsweise mittels eines ersten schwenkbaren Spiegels, auf eine Bearbeitungszone des optischen Elements zu richten, in der Bearbeitungszone zu bewegen und die Bearbeitungszone des optischen Elements derart zu erwärmen, dass das Material des optischen Elements wenigstens in der Bearbeitungszone eine ausreichende Fließfähigkeit aufweist, um die offenen Enden der Kerne der Glasfasern, vorzugsweise ferner die offenen Enden von die Kerne im Wesentlichen umschließenden Mänteln der Glasfasern, in sich aufzunehmen, wobei die Aufnahmeeinheit zur Aufnahme wenigstens der Glasfasern in einer Bewegungsrichtung und bzw. oder die Aufnahmeeinheit zur Aufnahme wenigstens des optischen Elements in einer Bewegungsrichtung derart aufeinander zu beweglich ist bzw. sind, so dass wenigstens die Glasfasern und bzw. oder das optische Element derart aufeinander zu bewegt werden können, so dass die offenen Enden der Kerne der Glasfasern, vorzugsweise ferner die offenen Enden der Mäntel der Glasfasern, in der Bearbeitungszone des optischen Elements mit einer Eindringtiefe in das Material des optischen Elements eindringen und wenigstens das Material der offenen Enden der Kerne der Glasfasern, vorzugsweise ferner das Material der offenen Enden der Mäntel der Glasfasern, mit dem Material des optischen Elements verschmolzen werden kann.

Auf diese Art und Weise kann eine Bearbeitungsvorrichtung geschaffen werden, um Faseraustrittselemente, vorzugsweise wie zuvor beschrieben, mit einem möglichst hohen Grad an maschineller Unterstützung bzw. Automatisierung herstellen zu können. Dies kann die Qualität der hergestellten Produkte erhöhen und bzw. oder deren Kosten reduzieren.

Dabei die Bearbeitungszone des optischen Elements zumindest im Wesentlichen und vorzugsweise ausschließlich mittels des ersten Bearbeitungsstrahls zu erwärmen bzw. aufzuschmelzen und entsprechend die Glasfasern bzw. deren offenen Enden kaum bzw. gar nicht mittels des ersten Bearbeitungsstrahls zu erwärmen kann dahingehend vorteilhaft sein, dass die vergleichsweise filigranen Glasfasern hierdurch geschont und möglichst unverändert in dem optischen Element gehalten werden können.

Gemäß einem Aspekt der Erfindung weist die Bearbeitungsvorrichtung wenigstens eine zweite Bearbeitungsstrahlquelle, vorzugsweise eine zweite Laserstrahlquelle, besonders vorzugsweise eine zweite CO2-Laserstrahlquelle, auf, welche ausgebildet ist, einen zweiten Bearbeitungsstrahl zu erzeugen und direkt oder indirekt mittels eines zweiten beweglichen Ausrichtelements, vorzugsweise mittels eines zweiten schwenkbaren Spiegels, auf eine Bearbeitungszone des optischen Elements zu richten und in der Bearbeitungszone zu bewegen, so dass das Erwärmen der Bearbeitungszone des optischen Elements gemeinsam durch den ersten Bearbeitungsstrahl und durch den zweiten Bearbeitungsstrahl erfolgen kann. Dies kann die Gestaltungsmöglichkeiten der Erwärmung der Bearbeitungszone erhöhen.

Gemäß einem weiteren Aspekt der Erfindung ist die erste Bearbeitungsstrahlquelle, vorzugsweise und die zweite Bearbeitungsstrahlquelle, ausgebildet, direkt oder indirekt mittels des ersten beweglichen Ausrichtelements, vorzugsweise und mittels des zweiten beweglichen Ausrichtelements, den ersten Bearbeitungsstrahl, vorzugsweise und den zweiten Bearbeitungsstrahl, auf das Material des Mantels der Glasfaser im Bereich des Faseraustrittselements zu richten, so dass wenigstens eine Pumplichtfalle, vorzugsweise als Vertiefungen, in dem Material des Mantels der Glasfaser ausgebildet werden kann, um Mantellicht aus dem Mantel der Glasfaser nach außerhalb der Glasfaser abzuführen. Auf diese Art und Weise kann auch die Ausbildung einer Pumplichtfalle mittels der erfindungsgemäßen Bearbeitungsvorrichtung umgesetzt werden, was den Herstellungsaufwand des Faseraustrittselements mit Pumplichtfalle geringhalten kann. Mittels der Pumplichtfalle im Bereich des Faseraustrittselements, insbesondere zusätzlich zu wenigstens einer Pumplichtfalle im vorangehenden Verlauf der Glasfasern außerhalb des Bereich des Faseraustrittselements, kann Mantellicht bzw. restliches Mantellicht unmittelbar vor dem Faseraustrittselement aus dem Mantel entfernt und somit das Eindringen von Mantellicht in das Faseraustrittselement vermieden werden, was sonst zur Entstehung von Störlichtsignalen innerhalb des Faseraustrittselements führen kann. Auch rücklaufendes Mantellicht, vom optischen Element kommend, kann reduziert werden.

Gemäß einem weiteren Aspekt der Erfindung ist bzw. sind die Aufnahmeeinheit zur Aufnahme wenigstens der Glasfasern und bzw. oder die Aufnahmeeinheit zur Aufnahme wenigstens des optischen Elements derart angeordnet und bzw. oder schwenkbar beweglich, so dass die offenen Enden der Kerne der Glasfasern gegenüber einer Eintrittsfläche des optischen Elements wenigstens in einem ersten Winkel, vorzugsweise ferner in einem zweiten Winkel, ausgerichtet werden können, wobei der erste Winkel, vorzugsweise und bzw. oder der zweite Winkel, 90° oder verschieden zu 90° ist, wobei vorzugsweise der erste Winkel und der zweite Winkel gleich oder unterschiedlich sind. Hierdurch kann auch eine entsprechende Ausrichtung seitens der Bearbeitungsvorrichtung vorgenommen werden.

Gemäß einem weiteren Aspekt der Erfindung weist die Bearbeitungsvorrichtung wenigstens eine erste Bilderfassungseinheit, vorzugsweise eine erste Flächenkamera, auf, welche ausgebildet ist, das in der Aufnahmeeinheit aufgenommene optische Element von der Seite der Aufnahmeeinheit zur Aufnahme wenigstens der Glasfasern oder von der der Aufnahmeeinheit zur Aufnahme wenigstens der Glasfasern abgewandten Seite wenigstens im Bereich der Bearbeitungszone optisch zu erfassen, vorzugsweise weist die Bearbeitungsvorrichtung ferner eine zweite Bilderfassungseinheit, vorzugsweise eine zweite Flächenkamera, auf, welche ausgebildet ist, das in der Aufnahmeeinheit aufgenommene optische Element von der der ersten Bilderfassungseinheit gegenüberliegenden Seite wenigstens im Bereich der Bearbeitungszone optisch zu erfassen. Dies kann es zum Beispiel eine Person ermöglichen die Anordnung bzw. die Ausrichtung der Glasfasern gegenüber dem optischen Element wenigstens zu überprüfen.

Gemäß einem weiteren Aspekt der Erfindung ist bzw. sind die Aufnahmeeinheit zur Aufnahme wenigstens der Glasfasern senkrecht und bzw. oder rotatorisch zu ihrer Bewegungsrichtung und bzw. oder die Aufnahmeeinheit zur Aufnahme wenigstens des optischen Elements senkrecht und bzw. oder rotatorisch zu ihrer Bewegungsrichtung derart beweglich, so dass die offenen Enden der Kerne der Glasfasern und die Bearbeitungszone des optischen Elements zueinander ausgerichtet werden können. Hierdurch kann auch eine entsprechende Ausrichtung seitens der Bearbeitungsvorrichtung vorgenommen werden.

Gemäß einem weiteren Aspekt der Erfindung ist die Bearbeitungsvorrichtung, vorzugsweise eine Steuerungseinheit der Bearbeitungsvorrichtung, ausgebildet, die offenen Enden der Kerne der Glasfasern und die Bearbeitungszone des optischen Elements in Abhängigkeit wenigstens eines erfassten optischen Bildes der ersten Bilderfassungseinheit, vorzugsweise ferner der zweiten Bilderfassungseinheit, selbsttätig zueinander auszurichten. Dies kann eine Automatisierung des entsprechenden Vorgangs ermöglichen.

Gemäß einem weiteren Aspekt der Erfindung weist die Bearbeitungsvorrichtung wenigstens eine Ausrichtungseinheit, vorzugweise einen translatorisch und rotatorisch beweglichen Greifer, auf, welche ausgebildet ist, wenigstens eine, vorzugsweise einige, besonders vorzugsweise alle, der Glasfasern gemeinsam oder unabhängig von einander um die Achse ihrer länglichen Erstreckung gegenüber dem optischen Element auszurichten. Mit anderen Worten ist die Bearbeitungsvorrichtung mittels wenigstens einer Ausrichtungseinheit in der Lage, wenigstens eine Glasfaser zum Beispiel im Bereich dessen Beschichtung zu greifen und um ihre Längsachse zu drehen, so dass eine vorbestimmte Ausrichtung der Glasfaser erfolgen kann. Insbesondere kann die Ausrichtungseinheit hierzu nacheinander einzelne oder mehrere Glasfasern erreichen und derart ausrichten. Hierzu kann die Ausrichtungseinheit in translatorisch in einer Raumrichtung und vorzugsweise in einer Ebene senkrecht zur länglichen Erstreckungsrichtung der Glasfaser verfahren und positioniert werden. Dies kann beispielsweise mittels eines entsprechenden Greifers umgesetzt werden.

Hierdurch können nicht rotationssymmetrisch ausgebildete Glasfasern durch Drehung bzw. durch Ausrichtung um die Achse ihrer länglichen Erstreckung unterschiedlich gegenüber dem optischen Element ausgerichtet werden, was zum Beispiel bei polarisationserhaltenden Glasfasern und bzw. oder bei Glasfasern mit Stresskernen eine Beeinflussung der optischen Eigenschaften der Signalausgangsstrahlung erlauben kann, wie zuvor beschrieben.

Gemäß einem weiteren Aspekt der Erfindung weist die Bearbeitungsvorrichtung wenigstens eine Temperaturerfassungseinheit, vorzugsweise eine Infrarot-Flächenkamera, auf, welche ausgebildet ist, eine Temperatur des in der Aufnahmeeinheit aufgenommenen optischen Elements von der Seite der Aufnahmeeinheit zur Aufnahme wenigstens der Glasfasern wenigstens im Bereich der Bearbeitungszone zu erfassen. Dies kann wenigstens die Überwachung des Vorgangs des Erwärmens der Bearbeitungszone ermöglichen.

Gemäß einem weiteren Aspekt der Erfindung ist die Bearbeitungsvorrichtung, vorzugsweise eine Steuerungseinheit der Bearbeitungsvorrichtung, ausgebildet, das Erzeugen, vorzugsweise wenigstens die Leistung, und bzw. oder das Positionieren wenigstens des ersten Bearbeitungsstrahls, vorzugsweise ferner des zweiten Bearbeitungsstrahls, in Abhängigkeit der von der Temperaturerfassungseinheit erfassten Temperatur zu steuern und bzw. oder zu regeln. Hierdurch kann das Erwärmen bzw. das Aufzuschmelzen der Bearbeitungszone temperaturgesteuert bzw. temperaturgeregelt erfolgen. Dies kann zum einen eine unnötige Erwärmung der Bearbeitungszone vermeiden. Zum anderen kann hierdurch eine ausreichende Erwärmung der Bearbeitungszone sichergestellt werden, bevor die offenen Enden der Glasfasern in die Bearbeitungszone hinein bewegt werden. Dies kann die Qualität der hergestellten Faseraustrittselemente verbessern und bzw. oder den Ausschuss von fehlerhaften Faseraustrittselementen reduzieren.

Gemäß einem weiteren Aspekt der Erfindung weist die Bearbeitungsvorrichtung wenigstens eine Kühlungseinheit auf, welche ausgebildet ist, das in der Aufnahmeeinheit aufgenommene optische Element zumindest im Wesentlichen außerhalb des Bereichs der Bearbeitungszone abzukühlen, wobei die Kühlungseinheit vorzugsweise ein Luftgebläse aufweist, welches ausgebildet ist, einen Luftstrom auf die der Aufnahmeeinheit zur Aufnahme wenigstens der Glasfasern abgewandte Seite des optischen Elements zu richten. Hierdurch kann die Erwärmung des optischen Elements außerhalb der Bearbeitungszone reduziert werden.

Mit anderen Worten werden optische Glasfasern heute typischerweise zur Erzeugung von Laserstrahlung oder zum Transport von Laserstrahlung (engl. beam delivery) vom Laser zum Einsatzort verwendet. Hierbei kann es sich zum Beispiel um Single- oder Multi-Mode Glasfasern, polarisationserhaltende Glasfasern (PM) oder Photonische Kristallglasfasern sowie Hollow-Core-Glasfasern handeln ¬ um nur einige Beispiele an am Markt verfügbaren Glasfasertypen zu benennen. Die erfindungsgemäßen optischen Komponenten und Verfahren zur Herstellung dieser Komponenten beziehen sich deshalb auf die vollständige Bandbreite der am Markt verfügbaren Glasfasertypen. Auch wenn sich das Haupanwendungsgebiet auf Glasfasern bezieht, können Polymerfasern oder Fasern aus anderen Materialien, zum Beispiel sogenannte Soft-Glass-Fibers für den mittleren IR Bereich, ebenfalls für diese Anwendung(en) eingesetzt werden.

Für viele Anwendungen, zum Beispiel in der Materialbearbeitung oder in der Medizintechnik, ist es jedoch relevant, mehrere Laserstrahlen in einer möglichst räumlich kompakten und vor allem thermisch und mechanisch hochstabilen Anordnung am Einsatzort zu nutzen. Dies könnte man zum Beispiel in der Freistrahloptik mit einer beliebigen Anordnung von Mikrolinsen realisieren, aber hierdurch würde man die erheblichen Vorteile der Glasfasertechnologie verlieren.

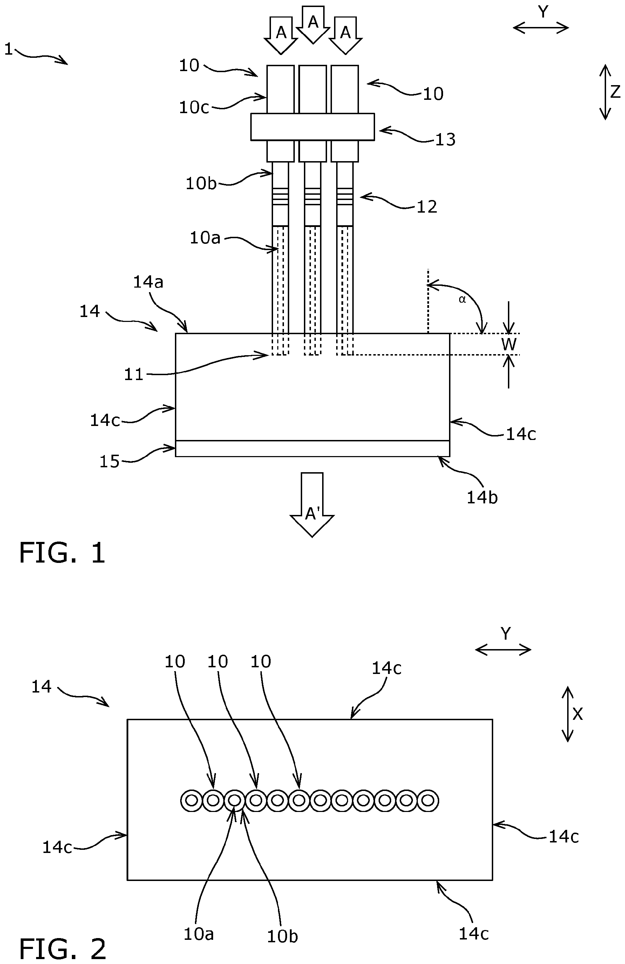

Um diese Problematik zu überwinden, können erfindungsgemäß mehrere Glasfasern in einer beliebigen Anordnung an ein optisches Element geschweißt (gespleißt, engl. Fusion Splicing) werden (siehe zum Beispiel Figur 1). Durch das Schweißen (Spleißen) realisiert man eine monolithische optische Komponente, die eben insbesondere für mittlere und hohe optische Leistungen geeignet ist und gelichzeitig in kompakter Form eine glasfaserbasierte Formung (üblicherweise räumlich) von Energiestrahlung vorzugsweise Laserstrahlung in einer rauen industriellen Umgebung oder in einem Bereich mit hohen Sicherheitsaspekten, wie zum Beispiel in der Medizintechnik, oder in einem Anwendungsbereich mit extrem hohen Temperaturanforderungen, ermöglicht. Wobei neben dem typischen Schweißen auch andere Verbindungstechniken genutzt werden könnten.

Dabei kann beim Verbinden der Glasfasern mit dem optischen Element die Eindringtiefe der optischen Glasfasern in das optische Element je nach Anwendung eingestellt werden. Es ist auch möglich, dass die Glasfasern beim Verbinden mit dem optischen Element unterschiedlich tief (z-Richtung der Figur. 1) in das optische Element eindringen oder einzelne bzw. alle Glasfasern durch Bohrungen oder weitere Hilfsmittel extra tief in das optische Element eingesetzt werden. Außerdem können einzelne Glasfasern oder alle Glasfasern unter einem bestimmten Winkel α (siehe zum Beispiel Figur 1) mit dem optischen Element verbunden werden. Dies gilt ebenso für den in der Figur 1 nicht dargestellten Winkel in der z-y-Ebene.

Ein beispielhafter Aufbau einer solchen optischen Komponente zur Zusammenführung und Formung von Energiestrahlung, vorzugsweise Laserstrahlung ist in der Figur 1 dargestellt. An die Glasfasern 1 bis n können Laserstrahlquellen oder andere Strahlquellen (kohärent oder inkohärent, ggf. polarisationserhaltend, ggf. gepulst) angebunden werden. Somit kann die elektromagnetische Strahlung von mehreren Laserstrahlquellen oder anderen Strahlquellen an den Einsatzort transportiert werden.

Dabei können die Strahlquellen bzw. die Leistungsanteile in den optischen Glasfasern gleichzeitig, zeitlich versetzt oder mit einer für den Prozess sinnvollen zeitlichen Modulation der einzelnen Leistungsanteile in den optischen Glasfasern betrieben werden. Die Strahlquellen können baugleich sein oder sich zum Beispiel in der Polarisation, in der Wellenlänge oder in der optischen Pulslänge unterscheiden. Außerdem ist es möglich, die Leistung bzw. einzelne spektrale Leistungsanteile einer Strahlquelle oder ggf. Laserstrahlquelle auf die Glasfasern 1 bis n in beliebigen Teilungsverhältnissen zu übertragen. Der Laser oder eine beliebige andere Lichtquelle kann kontinuierlich oder gepulst arbeiten. Die Glasfasern 1 bis n können auch zur kohärenten oder inkohärenten Kombination von Laserstrahlquellen genutzt werden. Hier gibt es je nach Anwendung zahlreiche Variationsmöglichkeiten basierend auf den zur Verfügung stehenden Eigenschaften der Lasersysteme bzw. anderer verfügbarer Lichtquellen.

Das optische Element (siehe zum Beispiel Figur 1) kann zum Beispiel ein optisches Fenster mit oder ohne optische Beschichtung oder eine Linse sowie ein optischer Strahlteiler sein, um nur einige Beispiele an optischen Elementen zu benennen. Das optische Element kann auch aus einer Vielzahl von optischen Einzelelementen bestehen, zum Beispiel einem Array von Mikrolinsen oder einem flexiblen Material (zum Beispiel Polymer) mit brauchbaren optischen Eigenschaften für die jeweilige Anwendung. Das optische Element kann auch aus verschiedenen Materialien bestehen oder in seine Materialeigenschaften über seine Dimension (x-,y- und z Richtung, siehe zum Beispiel Figur 1) variieren, zum Beispiel durch partielle Dotierung des optischen Elements. Besteht das optische Element aus verschiedenen Materialien, so können diese verklebt, geschweißt oder gebondet sein.

Das optische Element erfüllt dabei insbesondere zu mindestens teilweise oder vollständig folgende wichtige Eigenschaften:
1. stabile Fixierung der Glasfaser(n) in einer bestimmten geometrischen Anordnung (üblicherweise ohne die Verwendung von Zusatzhilfsmitteln wie Klebstoffen);
2. Modifikation der optischen Eigenschaft, zum Beispiel Strahlform, einzelner oder aller Strahlquellen 1 bis n vor dem Erreichen des Einsatzorts;
3. räumliche Aufweitung des optischen Strahls bei der Propagation durch das optische Element zur Reduzierung der optischen Intensität an der Grenzfläche Glas/Luft;
4. mechanisch und bzw. oder optisch stabile Aufnahme für die Glasfaser(n);
5. hohe thermische Beständigkeit, da üblicherweise keine Kleber oder andere Hilfsstoffe verwendet werden müssen;
6. hohe optische Leistungsbeständigkeit;
7. beliebige Formung von Energiestrahlung am Einsatzort auf sehr kleinem Raum;
8. geringe Absorption der optischen Strahlung im Volumen des Elements;
9. geringe Reflektionen an den Grenzflächen des optischen Elements, zum Beispiel durch eine Anti-Reflektionsbeschichtung;
10. Umsetzung einer glasfaserbasierten Lösung;
11. Verbindung von (räumlicher) Strahlformung auf einer Skala von einigen 10µm bis einigen Millimetern und Führung von mittleren und hohen optischen Leistungen;
12. das optische Element kann im Vergleich zu den kleinen Glasfasern (einige 100µm) eine signifikant größere Baugröße und nahezu beliebige Bauform aufweisen und somit in mechanischen Halterungen entsprechend gut gehaltert werden.

Die Anordnung der Glasfasern an/auf dem optischen Element kann beliebig ausgeführt werden, je nachdem, was die spezifische Anwendung erfordert. Einige Ausführungsbeispiele zu Anordnungen der Glasfasern(n) an bzw. auf dem optischen Element sind in den Figuren 2 bis 6 dargestellt. Die Figuren 2 bis 6 zeigen beispielhaft, dass durch die gezielte Anordnung der Glasfasern an bzw. auf dem optischen Element 1- bzw. 2-dimensionale Faserarrays entstehen. Die dritte Dimension kann durch die Variation der Glasfasern in der Tiefe (z-Richtung) genutzt werden. Die Glasfasern können dabei direkt in Glas-zu-Glas Kontakt sein (ohne Abstand) oder einen definierten Abstand besitzen. Der Abstand der Glasfasern auf bzw. an dem optischen Element kann von Glasfaser zu Glasfaser variieren - in beide Dimensionen (x-Richtung und y-Richtung, siehe zum Beispiel Figur 1).

Zusätzlich kann ggf. durch Ätzen der Glasfasern der Durchmesser der einzelnen Glasfaser reduziert werden und somit der Abstand zwischen den Glasfasern reduziert werden. Weiterhin können die Glasfasern oder einzelne Glasfasern vor dem Schweißprozess an/auf das optische Element im Durchmesser verjüngt (engl. "Tapern") werden. Außerdem können die Glasfasern oder einzelne Glasfasern vor dem Schweißprozess an/auf das optische Element in einer beliebigen Anordnung (zum Beispiel einem Faserbündel) bereits lateral verschweißt (engl. "Fiber Fusion") werden. Die Herstellungsschritte Verjüngen und Verschweißen der Glasfasern als Vorprozess vor dem eigentlichen Verbinden der Glasfasern mit dem optischen Element können beliebig kombiniert werden.

Die Glasfasern können verschiedene Durchmesser (typischerweise ca. 80 µm bis ca. 1,5 mm) und Querschnitte besitzen, zum Beispiel rund, rechteckig sowie oktogonal. Durch die räumliche Anordnung der einzelnen Glasfasern 1 bis n (siehe zum Beispiel Figur 1) an/auf dem optischen Element kann nach dem optischen Element (am Einsatzort) für eine bestimmte Anwendung eine definierte Strahlform erzielt werden, zum Beispiel eine Linie, ein Kreis, ein Halbkreis, ein Hohlzylinder oder eine V-Form.

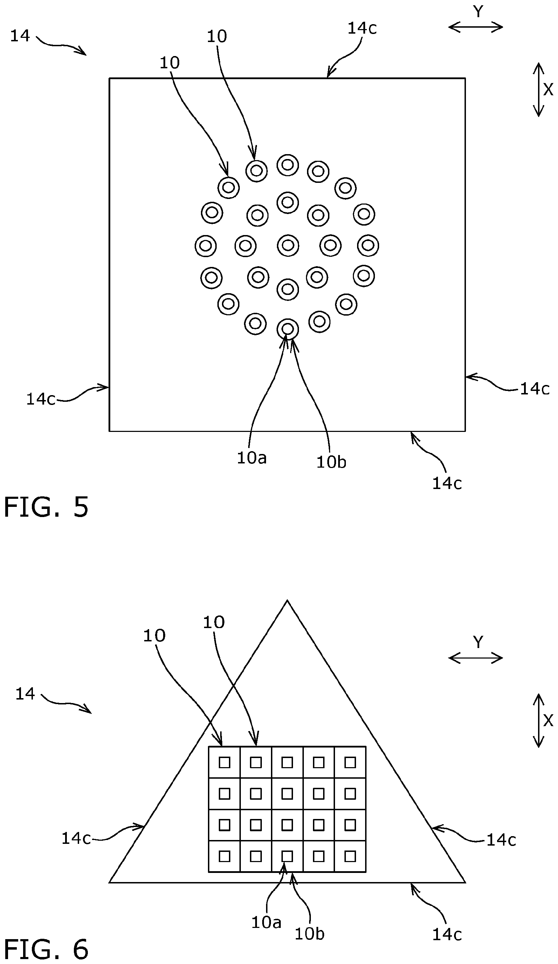

Durch die zeitliche Variation der optischen Leistung, die in den jeweiligen Glasfasern 1 bis n geführt wird, kann die Strahlform sowie weitere Eigenschaften der Strahlungsquelle (Leistung, Intensität, Energie, Polarisation, spektrale Bandbreite) zusätzlich in Abhängigkeit verschiedener Prozessparameter variiert werden. Hierdurch kann eine Steuerung bzw. Regelung der Strahlung am Einsatzort erfolgen. So kann zum Beispiel bei der Anordnung der Glasfasern auf bzw. an dem optischen Element wie in Figur 5, der Strahldurchmesser des Energiestrahls, vorzugsweise Laserstrahls, am Einsatzort variiert werden. Wird ausschließlich Strahlung von der Zentralfaser emittiert, ist der Strahldurchmesser am Einsatzort sehr klein. Wird Strahlung aus den Glasfasern des ersten Rings emittiert, erhöht sich der Strahldurchmesser. Der max. Strahldurchmesser wird erzielt, sobald die Glasfasern aus dem zweiten Ring des optischen Elementes Strahlung emittieren. Dies kann nun durch eine Steuerung bzw. Regelung beliebig im Fertigungsprozess, zum Beispiel beim Laserschweißen oder Laserschneiden, genutzt werden. Die zeitliche Strahlformung bzw. Laserstrahlformung könnte somit im Mikro- oder Millisekunden Bereich erfolgen.

Die optische Komponente in Figur 1 zeichnet sich insbesondere dadurch aus, dass sie durch ihre Aufbauart die kompakte Zusammenführung und Formung von optischer Strahlung mit optischen Glasfasern für mittlere und höhere optische Leistungen erlaubt (typischerweise größer als ca. 1 W bis einige 10 kW).

Die optische Komponente zeichnet sich weiterhin insbesondere dadurch aus, dass viele Glasfasern auf sehr kompakten Raum in einer beliebigen Form bzw. Anordnung mit Hilfe eines optischen Elementes durch zum Beispiel Verschweißen der Glasfasern mit dem optischen Element in eine hochstabile monolithische Komponente überführt werden kann, die auf kleinstem Raum, üblicherweise ca. 100 µm bis ca. 10 mm, optische Strahlung mit hohen Leistungen (bis einige 10 kW) transportieren, zusammenführen und formen kann.

Außerdem ermöglicht die optische Komponente, wie beispielhaft in der Figur 1 dargestellt, eine für den Einsatzort notwendige gezielte Strahlungsformung und bzw. oder die Steuerung oder Regelung anderer optischer Eigenschaften auf engstem Bauraum. Aufgrund der monolithischen und somit hochstabilen Ausführung der optischen Komponente mit faserbasierter Strahlungszuführung kann zum Beispiel die Komponente hervorragend an einem Roboterarm zu Laserfertigung eingesetzt werden. Der Roboterarm kann sich mit hohen Geschwindigkeiten und Beschleunigungen bewegen ohne die Lichtführung und Strahlformung zu beeinflussen.

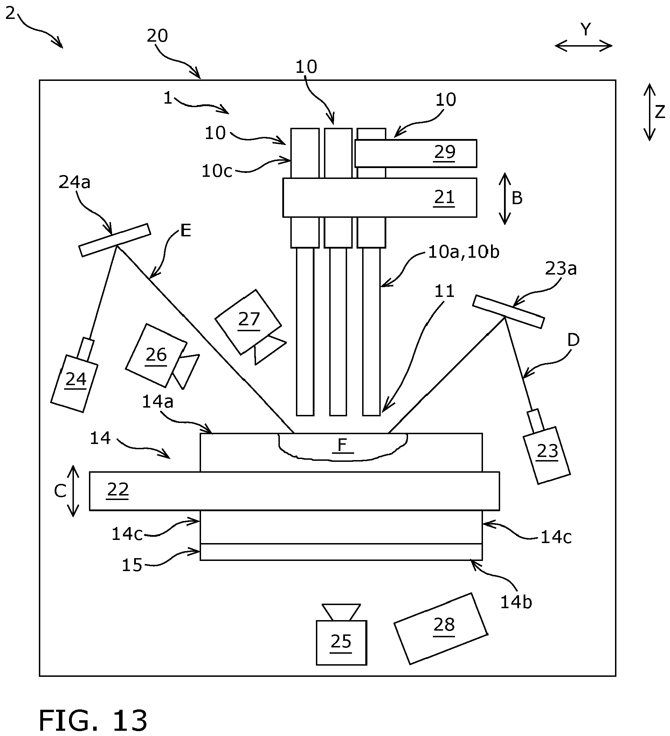

Zur Herstellung der oben beschrieben optischen Elemente, wie beispielhaft in der Figur 1 dargestellt, kann die in Figur 13 erkenntliche Bearbeitungsvorrichtung genutzt werden. Die Bearbeitungsvorrichtung besitzt mindestens eine Strahlungsquelle zum Beispiel in Form einer Laserstrahlquelle, welchen einen Energiestrahl in Form eines Laserstrahls gerichtet aussenden kann. Der Laserstrahl kann ggf. durch eine Linse fokussiert oder defokussiert werden (nicht dargestellt) sowie durch ein schwenkbares Umlenkelement in Form eines schwenkbaren Spiegels (siehe Figur 13) um zwei Achsen umgelenkt werden. Der Energiestrahl bzw. die Energiestrahlen können je nach Anwendung unter jedem beliebigen, technisch sinnvollen Winkel auf das optische Element auftreffen. Der Durchmesser des Laserstrahl kann auf dem optischen Element je nach Anwendung variieren und beträgt üblicherweise einen Durchmesser (Gaußstrahl 1/e2) von ca. 100 µm bis einige Millimeter. Bei manchen Anwendungen kann der Laserstrahldurchmesser noch deutlich größer ausgeführt werden.

Der Energiestrahlung wird von den Glasfasern und bzw. oder von dem optischen Element teilweise oder vollständig absorbiert. Daraus resultiert die für den Schweißprozess notwendige Erwärmung. Durch die zeitliche Steuerung bzw. Regelung des Energiestrahls und bzw. oder des Umlenkelements kann eine gezielte zeitliche sowie räumliche Formung der Schweißzone für das Schweißen (Spleißen) von Einzelglasfasern oder beliebigen Faseranordnungen wie in den Figuren 2 bis 6 beispielhaft dargestellt, realisiert werden. Die Schweißzone kann somit zum Beispiel also rund, eckig, V-förmig oder ringförmig realisiert werden. Somit kann die Schweißzone an die in den Figuren 2 bis 6 dargestellten Glasfaseranordnungen für den Schweißprozess angepasst werden. Das Umlenkelement kann ggf. elektrisch oder elektromagnetisch gesteuert werden (zum Beispiel über einen Galvanometer-Scanner).

Um den Schweißprozess sehr präzise steuern zu können, kann die aus der Schweißzone emittierte Wärmestrahlung mit einem Sensor erfasst werden und zur Regelung bzw. Steuerung der Laserleistung sowie der Umlenkeinheit oder weiterer Prozessgrößen genutzt werden. Hierdurch kann zum Beispiel mit einem Pyrometer oder einer Wärmebildkamera die Prozesstemperaturen erfasst werden. Bei der Ausformung der Schweißzone kann zusätzlich das optische Element translatorisch sowie rotatorisch bewegt werden.

Nach der Ausformung der Schweißzone auf dem optischen Element werden die Glasfasern einzeln, in bestimmten Paketen oder alle gemeinsam in das optische Element entlang der Bewegungsrichtung (siehe Figur 13) eingetaucht. Die Glasfasern können dabei direkt in seitlichen Kontakt sein oder einen gewissen Abstand haben. Der Abstand von Glasfaser zu Glasfaser kann auch variieren. Außerdem können einzelne Glasfasern oder alle Glasfasern unter einem bestimmten Winkel mit dem optischen Element verscheißt werden. Beim Eintauchprozess wird der Energiestrahl bzw. Laserstrahl üblicherweise abgeschaltet. Die Eintauchtiefe der Glasfasern in das optische Element beträgt üblicherweise einige µm bis einige 10 µm, kann aber auch für besondere Anwendungen deutlich größer als 100 µm sein.

Beim Schweißprozess wird üblicherweise nur das optische Element durch Energiestrahlung erwärmt. Die Glasfasern werden somit nicht direkt mit Energiestrahlen bestrahlt. Beim Verschweißen dient das große optische Element als Wärmespeicher und erwärmt die Glasfasern vor dem Eintauchen in das optische Element ausreichend auf. Um diesen Schweißprozess vollständig stoffschlüssig zu realisieren, müssen Prozesstemperaturen, Eintauchgeschwindigkeiten der Glasfasern und weitere Prozessparameter sehr präzise gesteuert werden. Sollte die Temperatur des optischen Elementes beim Eintauchprozess der Glasfasern im Bereich der Schweißzone eine zu starke Abkühlung erfahren, so kann das optische Element auch während des Eintauchprozesses der Glasfasern mit Energiestrahlung geheizt werden. Mit Hilfe des Umlenkelements wird die Energiestrahlung so auf das optische Element gelenkt, dass ein Weiter- bzw. Nachheizen des optischen Elementes realisiert wird, ohne die Energiestrahlung an die Glasfasern zu lenken. Es gibt natürlich auch Glasfaseranordnungen, die eine gleichzeitige Energiebestrahlung der Glasfasern und des optischen Elementes beim Schweißprozess zulassen.

Das ausschließliche Erwärmen des optischen Elements mit Energiestrahlung, d.h. die Glasfaser wird nicht mit Energie bestrahlt und somit erwärmt, ist auch beim Schweißen von temperatursensiblen Einzelglasfasern technologisch hochrelevant (zum Beispiel Hollow Core Glasfasern, Photonische Kristallglasfasern). Außerdem kann diese Herangehensweise auch beim Verschweißen von Glasfasern mit einem niedrigen Schmelzpunkt (Soft Glass Fibers) relevant sein oder beim Verschweißen von verschiedenen Materialien. Hierdurch können Schweißverbindungen erzielt werden, die mit bisherigen in der Literatur dargestellten Energie-Bestrahlungsmethoden, also der gleichzeitigen Bestrahlung von Glasfaser und optischen Element kaum bzw. nicht realisiert werden können.

Für die in Figur 13 dargestellte Bearbeitungsvorrichtung hat sich in der Praxis der CO2 Laser aufgrund der guten Absorption der Laserstrahlung (etwa 10 µm Wellenlänge) in Quarzglas und der vergleichsweise kostengünstigen Anschaffung als besonders vorteilhaft erwiesen. Die für die Bearbeitungsvorrichtung verwendete Laserstrahlung kann hinsichtlich der Wellenlänge, der Polarisation, der Pulslänge und weiterer optischer Eigenschaften für die jeweilige Anwendung optimiert werden. Das optische Element in Figur 13 könnte auch durch Energiestrahlung, vorzugsweise Laserstrahlung, von der Seite oder von unten (potentiell von allen Raumrichtungen) aus einer Kombination der beschrieben Varianten realisiert werden. Es können zur Erwärmung des optischen Elementes sowie ggf. der Glasfasern auch mehrere Laserstrahlquellen mit verschiedenen optischen Eigenschaften genutzt werden.

Zur Positionierung der Glasfasern und des optischen Elements bzw. der optischen Elemente, zur Prüfung der Qualität der Schweißverbindung während und nach dem Prozess sowie zur Steuerung bzw. Regelung des Schweißprozesses kann die erste und zweite Kamera genutzt werden (siehe Figur 13). Die Kameras können im sichtbaren Wellenlängenbereich (VIS) und bzw. oder im infraroten Wellenlängenbereich arbeiten. Die Figur 13 zeigt eine typische aber nicht zwingende Anordnung der Kamerasysteme. Es können auch mehr als zwei Kameras an anderen Positionen zur Positionierung der Glasfasern und des optischen Elements bzw. der optischen Elemente, zur Prüfung der Qualität der Schweißverbindung während und nach dem Prozess sowie zur Steuerung bzw. Regelung des Schweißprozesses genutzt werden. Die Kameras können natürlich je nach gewünschter optischer Abbildung mit entsprechenden Linsen bzw. Objektiven ausgerüstet werden.

Mehrere Ausführungsbeispiele und weitere Vorteile der Erfindung werden nachstehend im Zusammenhang mit den folgenden Figuren rein schematisch dargestellt und näher erläutert. Darin zeigt:
- Figur 1: eine schematische Darstellung eines erfindungsgemäßen Faseraustrittselements von der Seite;
- Figur 2 bis 6: schematische Darstellungen auf verschiedene Anordnungen von Glasfasern von oben;
- Figur 7 bis 11: schematische Darstellungen auf verschiedene Anordnungen von Glasfasern mit verschiedenen optischen Elementen von der Seite;
- Figur 12: die Darstellung der Figur 1 mit Gehäuse; und
- Figur 13: eine schematische Darstellung einer erfindungsgemäßen Bearbeitungsvorrichtung von der Seite.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann. Die Längsrichtung X und die Querrichtung Y bilden gemeinsam die Horizontale X, Y, welche auch als horizontale Ebene X, Y bezeichnet werden kann.

Figur 1 zeigt eine schematische Darstellung eines erfindungsgemäßen Faseraustrittselements 1 von der Seite. Das Faseraustrittselement 1 kann auch als Signallichtstrahlungsausgang 1, als Faseraustrittsoptik 1 oder als Faserarray 1 bezeichnet werden.

Das Faseraustrittselement 1 weist eine Mehrzahl von Glasfasern 10 auf, welche jeweils einen Kern 10a besitzen, welcher jeweils von einem Mantel 10b und der Mantel 10b von einer Beschichtung 10c zylindrisch umschlossen wird. Die Querschnitte bzw. die Konturen der Kerne 10a, der Mäntel 10b und der Beschichtungen 10c sind jeweils kreisförmig. In ihrer länglichen Erstreckungsrichtung enden die Glasfasern 10 in der vertikalen Richtung Z auf einer gemeinsamen gleichen Höhe mit jeweils einem offenen Ende 11. Dabei erstrecken sich die Kerne 10a und die Mäntel 10b der Glasfasern 10 gleichweit und enden gemeinsam an dem jeweiligen offenen Ende 11. Die Beschichtungen 10c sind jeweils in der vertikalen Richtung Z auf gleicher Höhe zu den offenen Enden 11 der Glasfasern 10 beabstandet.

Das Faseraustrittselement 1 weist ferner ein optisches Element 14 auf, welches auch als optisches Fenster 14, als optische Linse 14, als optischer Strahlteiler 14 oder als optisches Prisma 14 bezeichnet werden kann. Das optische Element 14 ist beispielsweise gemäß der Figur 1 quaderförmig ausgebildet und weist in der vertikalen Richtung Z nach oben zeigend eine Eintrittsfläche 14a und gegenüberliegend nach unten zeigend eine Austrittsfläche 14b auf. Die vier Seiten des quaderförmigen optischen Elements 14 werden von den Seitenflächen 14c gebildet. An der Unterseite des optischen Elements 14 ist eine optische Beschichtung 15 in Form einer Anti-Reflektionsbeschichtung 15 flächendeckend aufgebracht, welche dem optischen Element 14 zugerechnet werden kann, sodass die Austrittsfläche 14b des optischen Elements 14 mit der Unterseite bzw. Außenseite der Anti-Reflektionsbeschichtung 15 zusammenfällt.

Die offenen Enden 11 der Kerne 10a und der Mäntel 10b der Glasfasern 10 sind dabei mit einer Eindringtiefe W gegenüber der Eintrittsfläche 14a des optischen Elements 14 innerhalb des Materials des optischen Elements 14angeordnet. Die Materialien der Kerne 10a und der Mäntel 10b der Glasfasern 10 sind hierzu mit dem Material des optischen Elements 14 verschmolzen worden, wie weiter unten noch näher beschrieben werden wird. Hierdurch kann sichergestellt werden, dass Signallichtstrahlungen A zum Beispiel in Form von Laserlichtstrahlungen A möglichst störungsfrei und vollständig in das optische Element 14 eingeleitet werden können. Die in das optische Element 14 eingeleiteten Signallichtstrahlungen A können dieses durchlaufen und als Austrittsstrahlungen A' über die Austrittsfläche 14b des optischen Elements 14 nach außen austreten. Die Austrittsstrahlungen A' können hierdurch auch einen kombinierten Ausgangstrahl bilden. Auch kann hierdurch die mechanische Stabilität der stoffschlüssigen Verbindung zwischen den Glasfasern 10 und dem optischen Element 14 verbessert werden.

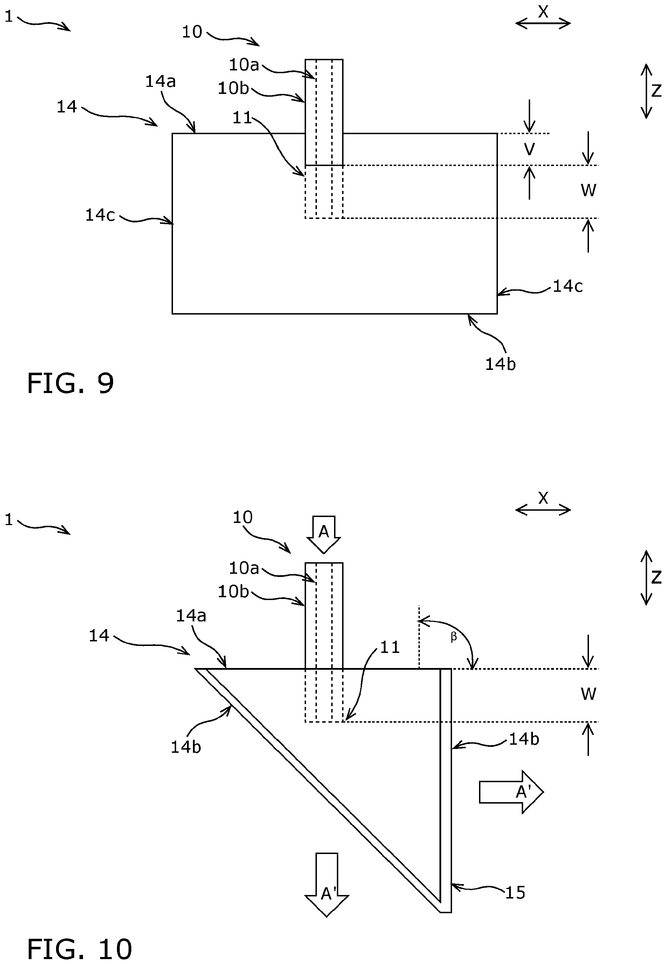

Die Glasfasern 10 sind dabei senkrecht zur Eintrittsfläche 14a des optischen Elements ausgerichtet, sodass sowohl ein erster Winkel α als auch ein zweiter Winkel β, siehe Figur 10, 90° betragen.

Die Mäntel 10b der Glasfasern 10 weisen in dem Bereich, in dem die Beschichtungen 10c entfernt sind, jeweils eine Pumplichtfalle 12 auf, welche auch als Mantellichtentferner 12 oder als Stripping-Element 12 bezeichnet werden kann und in Form von ringförmigen Vertiefungen 12 ausgebildet ist. Durch die Ausrichtung der ringförmigen Vertiefungen 12 senkrecht zur Ausbreitungsrichtung der Signallichtstrahlungen A bzw. der länglichen Erstreckungsrichtung der Glasfasern 10 kann störendes Mantellicht unmittelbar vor Erreichen des optischen Elements 14 aus den Mänteln 10b der Glasfasern 10 nach außen hin ausgekoppelt werden. Auf diese Art und Weise kann der Eintrag von Störstrahlungen seitens des Mantellichts in das optische Element 14 vermieden werden. Auch rücklaufendes Mantellicht, vom optischen Element kommend, kann reduziert werden.

Im Bereich der Beschichtungen 10c der Glasfasern 10 ist ein Spannungselement 13 über alle Glasfasern hinweg angeordnet. Über das Spannungselement 13 kann eine mechanische Spannung zum Beispiel in Form von Druckkräften auf die Glasfasern 10 bzw. wenigstens deren Kerne 10a ausgeübt werden. Hierdurch kann die Übertragung bzw. können die optischen Eigenschaften der Signallichtstrahlungen A gezielt durch die Einstellung der mechanischen Spannung beeinflusst werden.

Die Seitenflächen 14c sowie die Eintrittsfläche 14a des optischen Elements 14 sind dabei optisch angeraut, um das Austreten von Störstrahlungen aus dem optischen Element 14 hinaus zu begünstigen. Die Unterseite des optischen Elements 14, welche von der optischen Beschichtung 15 abgedeckt wird, ist optisch glatt ausgebildet, um hierdurch den Austritt der Austrittstrahlungen A' zu begünstigen.

Figur 2 zeigt eine schematische Darstellung einer Anordnung von Glasfasern 10 von oben. In diesem Fall sind die zylindrischen Glasfasern 10 in der Querrichtung Y linienförmig abstandslos angeordnet, sodass sich die Mäntel 10b der unmittelbar benachbarten Glasfasern 10 berühren. Das optische Element 14 ist rechteckig bzw. quaderförmig ausgebildet.

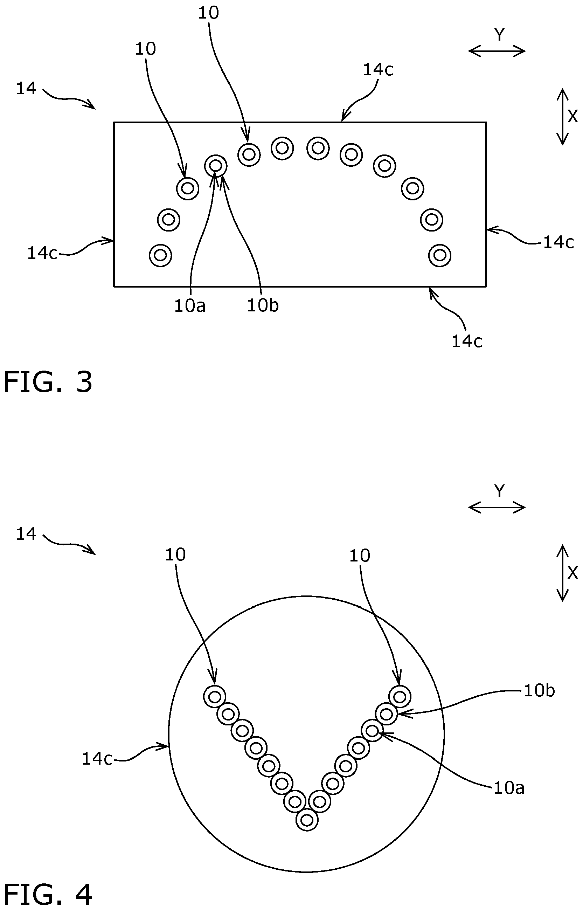

Figur 3 zeigt eine schematische Darstellung einer Anordnung von Glasfasern 10 von oben. Auch in diesem Fall ist das optische Element 14 rechteckig bzw. quaderförmig ausgebildet. Die zylindrischen Glasfasern 10 sind halbkreisförmig angeordnet und in der Umfangsrichtung zueinander beabstandet.

Figur 4 zeigt eine schematische Darstellung einer Anordnung von Glasfasern 10 von oben. In diesem Fall ist das optische Element 14 kreisrund bzw. zylindrisch ausgebildet. Die zylindrischen Glasfasern 10 sind v-förmig abstandslos angeordnet, sodass sich die Mäntel 10b der unmittelbar benachbarten Glasfasern 10 berühren.

Figur 5 zeigt eine schematische Darstellung einer Anordnung von Glasfasern 10 von oben. In diesem Fall ist das optische Element 14 quadratisch bzw. quaderförmig ausgebildet. Eine zylindrische Glasfaser 10 bildet den Mittelpunkt bzw. die Symmetrieachse einer punktsymmetrischen kreisförmigen Anordnung, bei welcher sich mehrere weitere zylindrische Glasfasern 10 in einem ersten inneren Ring und in einem zweiten äußeren Ring um den Mittelpunkt herum erstrecken.

Figur 6 zeigt eine schematische Darstellung einer Anordnung von Glasfasern 10 von oben, In diesem Fall ist das optische Element 14 dreieckig ausgebildet. Mehrere quadratische Glasfasern 10 mit quadratischen Kernen 10a und quadratischen Mänteln 10b bilden eine rechteckige Anordnung.

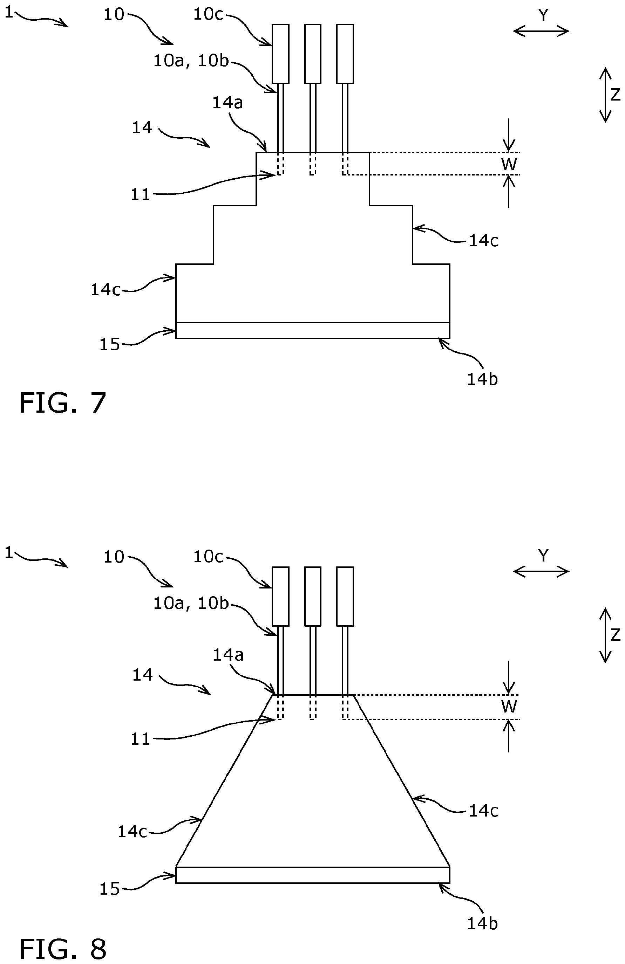

Figur 7 zeigt eine schematische Darstellung von Glasfasern 10 mit einem optischen Element 14 von der Seite. Die Glasfasern 10 sind in der Querrichtung Y linienförmig nebeneinander sowie zueinander beabstandet angeordnet. Das optische Element 14 verbreitert sich in der vertikalen Richtung Z von der Eintrittsfläche 14a bis zur Austrittsfläche 14c stufenförmig entlang aller vier Seitenflächen 14c. Hierdurch können das Gewicht und das Volumen des optischen Elements 14 reduziert werden. Auch kann die Fläche der Eintrittsfläche 14a des optischen Elements 14 minimiert werden, was den Vorgang des Aufzuschmelzens des Materials des optischen Elements 14 begünstigen kann.

Figur 8 zeigt eine schematische Darstellung von Glasfasern 10 mit einem optischen Element 14 von der Seite. Im Unterschied zur Figur 7 verbreitert sich das optische Element 14 in diesem Fall in der vertikalen Richtung Z von der Eintrittsfläche 14a bis zur Austrittsfläche 14c stufenlos und durchgängig gleichmäßig zunehmend.

Figur 9 zeigt eine schematische Darstellung von Glasfasern 10 mit einem optischen Element 14 von der Seite. In diesem Fall wurde in die Eintrittsfläche 14a des optischen Elements 14 eine nutförmige Vertiefung 17 in der Querrichtung Y eingebracht, welche eine Tiefe V in der vertikalen Richtung Z aufweist. Die Eindringtiefe W der offenen Enden 11 der Kerne 10a und der Mäntel 10b der Glasfasern 10 in das optische Element 14 beginnt somit erst auf dem Grund der Vertiefung 17, sodass die offenen Enden 11 der Glasfasern 10 gegenüber der Eintrittsfläche 14a des optischen Elements 14 um die Summe der Tiefe V und der Eindringtiefe W beabstandet sind. Dies kann die mechanische Stabilität der Verbindung der Glasfasern 10 zum optischen Element 14 erhöhen, ohne hierfür die offenen Enden 11 der Glasfasern 10 tiefer in das Material des optischen Elements 14 einschmelzen zu müssen.

Figur 10 zeigt eine schematische Darstellung von Glasfasern 10 mit einem optischen Element 14 von der Seite. In diesem Fall sind die Glasfasern 10 linienförmig in der Querrichtung Y angeordnet. Das optische Element 14 weist in der Ebene der Längsrichtung X der vertikalen Richtung Z einen dreieckigen Querschnitt auf, sodass die Austrittstrahlungen A' sowohl in der Längsrichtung X nach rechts als auch nach schräg links unten aus dem optischen Element 14 austreten können.

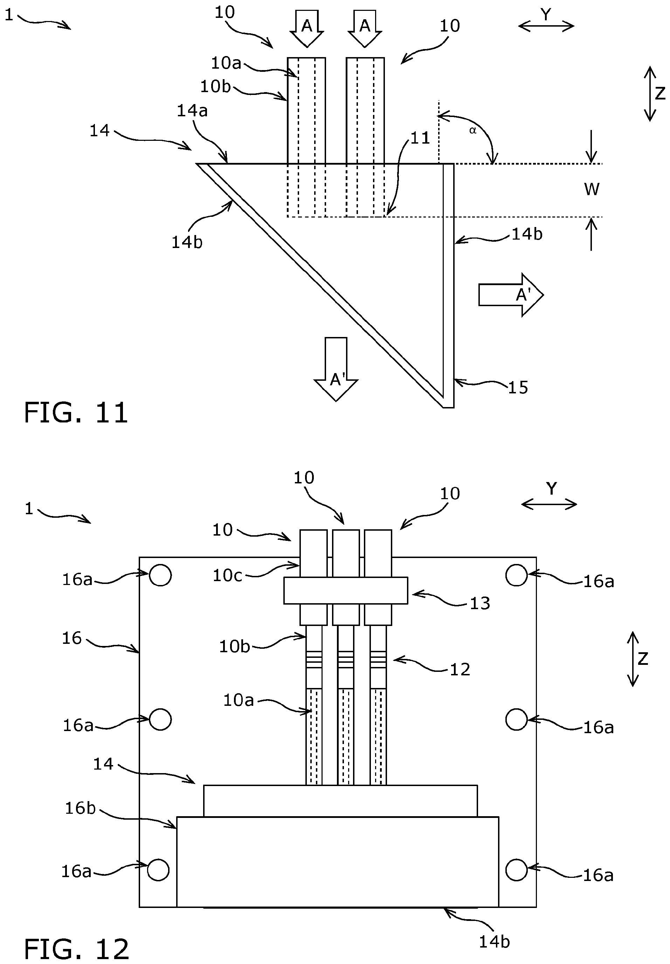

Figur 11 zeigt eine schematische Darstellung von Glasfasern 10 mit einem optischen Element 14 von der Seite. In diesem Fall sind die Glasfasern 10 linienförmig in der Längsrichtung X angeordnet.

Figur 12 zeigt die Darstellung der Figur 1 mit Gehäuse 16. Das Gehäuse 16 kann auch als Gehäuseplatte 16, als Gestell 16, als Faserstecker 16, als Wärmesenke 16 oder als Rahmen 16 bezeichnet werden. Auf dem Gehäuse 16 drauf wird das optische Element 14 von einer Halterung 16b derart bügelförmig gehalten, sodass die Austrittstrahlungen A' ungestört in der vertikalen Richtung Z nach unten hin austreten können, vergleiche Figur 1. Die Glasfasern 10 werden mittels des Spannungselements 13 von dem Gehäuse 16 gehalten, indem der Spannungselement 13 mittels Klebstoff auf dem Gehäuse 16 aufgeklebt wird. Das Gehäuse 16 weist mehrere Befestigungselemente 16a in Form von Durchgangsöffnungen 16a auf, um mittels Schrauben oder dergleichen durch die Durchgangsöffnungen 16a hindurch auf einem Untergrund montiert und gehalten zu werden. Das Gehäuse 16 kann mittels eines Deckels oder dergleichen (nicht dargestellt) entsprechend geschlossen werden. Die über die Pumplichtfalle 12 abgegebene Strahlung kann im Gehäuse 16 samt Deckel als Wärmesenke 16 aufgenommen werden.

Figur 13 zeigt eine schematische Darstellung einer erfindungsgemäßen Bearbeitungsvorrichtung 2 von der Seite. Mittels einer derartigen erfindungsgemäßen Bearbeitungsvorrichtung 2 kann das zuvor beschriebene Faseraustrittselement 1 aber auch andere Faseraustrittselemente sowie vergleichbare Glasfaserkomponenten hergestellt bzw. bearbeitet werden.

Die Bearbeitungsvorrichtung 2 weist ein Gehäuse 20 auf, welches die Komponenten bzw. die Bauteile der Bearbeitungsvorrichtung 2 hält und einen Arbeitsraum (nicht bezeichnet) umschließt, in welchem zum Beispiel das zuvor beschriebene Faseraustrittselement 1 bearbeitet bzw. hergestellt werden kann. Der Arbeitsraum kann zum Beispiel mittels einer Tür oder Klappe für eine Person verschließbar und zugänglich sein.

Es ist eine bewegliche Aufnahmeeinheit 21 vorgesehen, von welcher mehrere Glasfasern 10 vorzugsweise im Bereich ihrer Beschichtungen 10c aber ggfs. alternativ oder zusätzlich im Bereich ihrer Mäntel 10b zum Beispiel mittels eines mechanischen Halteelements zum Beispiel als Greifer oder dergleichen aufgenommen und gehalten werden können, um mit der Aufnahmeeinheit 21 wenigstens in einer Bewegungsrichtung B in der vertikalen Richtung Z bewegt zu werden. Es ist ferner eine bewegliche Aufnahmeeinheit 22 vorgesehen, von welcher das optische Element 14 zum Beispiel mittels eines mechanischen Halteelements zum Beispiel als Greifer oder dergleichen über dessen Seitenflächen 14c aufgenommen und gehalten werden kann, um mit der Aufnahmeeinheit 22 wenigstens in einer Bewegungsrichtung C in der vertikalen Richtung Z bewegt zu werden.

Die Bearbeitungsvorrichtung 2 weist ferner eine erste Bearbeitungsstrahlquelle 23 in Form einer ersten CO2-Laserstrahlquelle 23 auf, welche einen ersten Bearbeitungsstrahls D in Form eines ersten CO2-Laserstrahls D erzeugen kann. Der erste Bearbeitungsstrahls D wird von der ersten Bearbeitungsstrahlquelle 23 dabei auf ein erstes bewegliches Ausrichtelement 23a in Form eines ersten schwenkbaren Spiegels 23a gerichtet. Das erste bewegliche Ausrichtelement 23a ist entsprechend an dem Gehäuse 20 aufgehängt und mittels Antrieben (nicht dargestellt) einstellbar, sodass der erste Bearbeitungsstrahls D von dem ersten beweglichen Ausrichtelement 23a auf die Eintrittsfläche 14a des optischen Elements 14 ausgerichtet werden kann. Hierdurch kann mittels des ersten. Bearbeitungsstrahls D eine Bearbeitungszone F der Eintrittsfläche 14a des optischen Elements 14 erwärmt und das Material des optischen Elements 14 in diesem Bereich aufgeschmolzen und fließfähig gemacht werden.

Hierzu kann zusätzlich in der Querrichtung Y von der gegenüberliegenden Seite des optischen Elements 14 ein zweiter Bearbeitungsstrahls E in Form eines zweiten CO2-Laserstrahls E verwendet werden, welcher vorzugsweise von einer zweiten Bearbeitungsstrahlquelle 24 in Form einer zweiten CO2-Laserstrahlquelle 24 erzeugt und mittels eines zweiten beweglichen Ausrichtelements 24a in Form eines zweiten schwenkbaren Spiegels 24a auf die Bearbeitungszone F gerichtet werden kann. Alternativ kann der zweite Bearbeitungsstrahl E auch von der ersten Bearbeitungsstrahlquelle 23 zum Beispiels mittels eines Strahlteilers ausgehen. Die Bearbeitungszone F kann auch als Erwärmungszone F oder als Schweißzone F bezeichnet werden.

Hierdurch ist es möglich, seitens der Bearbeitungsvorrichtung 2 gemäß einer benutzerdefinierten Parametrierung selbstständig ein Verfahren zum Verbinden der offenen Enden 11 der Glasfasern 10 mit dem optischen Element 14 vorzunehmen. Sind von einer Person die Glasfasern 10 in der beweglichen Aufnahmeeinheit 21 und das optische Element 14 in der beweglichen Aufnahmeeinheit 22 angeordnet worden, so kann der Bearbeitung- bzw. Herstellprozess seitens der Bearbeitungsvorrichtung 2 derart betrieben werden, dass die Bearbeitungszone F wie zuvor beschrieben fließfähig erwärmt wird. Ist diese Temperatur der Bearbeitungszone F erreicht, so können nun einseitig oder beidseitig die Glasfasern 10 von deren beweglicher Aufnahmeeinheit 21 in der Bewegungsrichtung B in der vertikalen Richtung Z nach unten und bzw. oder das optische Element 14 von dessen beweglicher Aufnahmeeinheit 22 in der Bewegungsrichtung C in der vertikalen Richtung Z nach oben aufeinander zu bewegt werden, sodass die offenen Enden 11 der Glasfasern 10 im Bereich der Bearbeitungszone F in der vorbestimmten Eindringtiefe W in das fließfähige Material der Eintrittsfläche 14a des optischen Elements 14 eindringen können. Die Erwärmung der Bearbeitungszone F mittels der beiden Bearbeitungsstrahlen D, E kann zuvor beendet worden sein oder noch anhalten.

Ist die Eindringtiefe W erreicht, kann die Erwärmung der Bearbeitungszone F beendet werden. Alternativ kann die Erwärmung der Bearbeitungszone F auch schon vor dem Erreichen der Eindringtiefe W beendet werden. Das fließfähige Material der Eintrittsfläche 14a des optischen Elements 14 kann in jedem Fall nun die Materialien der Kerne 10a und der Mäntel 10b der Glasfasern 10 im Bereich der offenen Enden 11 mit aufschmelzen und hierdurch beim Abkühlen eine stoffschlüssige Verbindung eingehen.

Die Bearbeitungsvorrichtung 2 weist ferner eine erste Bilderfassungseinheit 25 in Form einer ersten Flächenkamera 25 auf, welche in der vertikalen Richtung Z mittig unterhalb des optischen Elements 14 angeordnet und auf die Austrittsfläche 14b des optischen Elements 14 ausgerichtet ist. Ferner weist die Bearbeitungsvorrichtung 2 eine zweite Bilderfassungseinheit 26 in Form einer zweiten Flächenkamera 26 auf, welche in der Höhe Z von schräg oben auf die Bearbeitungszone F der Eintrittsfläche 14a des optischen Elements 14 ausgerichtet ist. Mittels der beiden Bilderfassungseinheiten 25, 26 kann zum Beispiel seitens einer Person als Benutzer vor, während und nach des zuvor beschriebenen Verbindungsvorgangs eine optische Überwachung der Glasfasern 10 sowie des optischen Elements 14 erfolgen. Werden die bewegliche Aufnahmeeinheit 21 der Glasfasern 10 und bzw. oder die bewegliche Aufnahmeeinheit 22 des optischen Elements 14 ferner in der horizontalen Ebene X, Y beweglich ausgebildet, kann gleichzeitig mittels der beiden Bilderfassungseinheiten 25, 26 eine Ausrichtung der offenen Enden 11 der Glasfasern 10 gegenüber dem optischen Element 14 seitens des Benutzers oder auch selbsttätig automatisiert seitens der Bearbeitungsvorrichtung 2 erfolgen.

Die Bearbeitungsvorrichtung 2 weist ferner eine Ausrichtungseinheit 29 in Form eines translatorisch und rotatorisch beweglichen Greifers 29 auf, welcher genau eine der Glasfasern 10 unabhängig von den übrigen Glasfasern 10 im Bereich ihrer Beschichtung 10c greifen und um die Achse ihrer länglichen Erstreckung gegenüber dem optischen Element 14 auszurichten kann. Zwischen den einzelnen Glasfasern 10 kann der Greifer 29 in der Querrichtung Y und in der Längsrichtung X verfahren werden, um jede Glasfaser 10 zu erreichen und auszurichten. Hierdurch kann für jede Glasfaser 10 eine vorbestimmte Ausrichtung gegenüber dem optischen Element 14 ermöglicht werden, wodurch zum Beispiel bei polarisationserhaltenden Glasfasern 10 und bzw. oder bei Glasfasern 10 mit Stresskernen eine Beeinflussung der optischen Eigenschaften der Signalausgangsstrahlung erreicht werden kann.

Die Bearbeitungsvorrichtung 2 weist ferner eine Temperaturerfassungseinheit 27 in Form einer Infrarot-Flächenkamera 27 auf, welche ebenfalls in der Höhe Z von schräg oben auf die Bearbeitungszone F der Eintrittsfläche 14a des optischen Elements 14 ausgerichtet ist. Mittels der Temperaturerfassungseinheit 27 kann wenigstens eine Überwachung der Erwärmung der Bearbeitungszone F zum Beispiel seitens der Person erfolgen. Die Temperaturerfassungseinheit 27 kann jedoch auch seitens der Bearbeitungsvorrichtung 2 dazu verwendet werden, den zuvor beschriebenen Vorgang des Erwärmens der Bearbeitungszone F und bzw. oder den zuvor beschriebenen Vorgang des Eintauchens der offenen Enden 11 der Glasfasern 10 in das fließfähige Material der Bearbeitungszone F der Eintrittsfläche 14a des optischen Elements 14 zu überwachen und bzw. oder in Abhängigkeit der erfassten Temperatur der Bearbeitungszone F selbstständig geregelt durchzuführen.

Unterhalb der beweglichen Aufnahmeeinheit 22 des optischen Elements 14 weist die Bearbeitungsvorrichtung 2 ferner eine Kühlungseinheit 28 in Form eines Luftgebläses 28 auf, welches auf die Austrittsfläche 14b des optischen Elements 14 ausgerichtet ist. Mittels des Luftgebläses 28 kann ein Luftstrom von Umgebungsluft erzeugt und auf die Austrittsfläche 14b des optischen Elements 14 gerichtet werden, sodass aktiv Wärme von dem optischen Element 14 außerhalb der Bearbeitungszone F abgeführt werden kann. Hierdurch kann die Erwärmung des optischen Elements 14 außerhalb der Bearbeitungszone F gezielt geringgehalten werden.

Mittels der Bearbeitungsvorrichtung 2 bzw. dessen beider Bearbeitungsstrahlen D, E können in einem anschließenden Schritt der Herstellung auch die zuvor beschriebenen Pumplichtfallen 12 in die Mäntel 10b der Glasfasern 10 eingebracht werden.

Nach Abschluss der zuvor beschriebenen Herstellungsschritte kann das Faseraustrittselement 1 vom Benutzer aus dem Arbeitsraum der Bearbeitungsvorrichtung 2 entnommen und in einem zusätzlichen Herstellungsschritt mit dem Spannungselement 13 versehen werden.

### BEZUGSZEICHENLISTE (Teil der Beschreibung)

- α: erster Winkel zwischen Glasfasern 10 und Eintrittsfläche 14a des optischen Elements 14
- β: zweiter Winkel zwischen Glasfasern 10 und Eintrittsfläche 14a des optischen Elements 14

- A: Signallichtstrahlungen; Laserlichtstrahlungen
- A': Austrittsstrahlungen
- B: Bewegungsrichtung der Aufnahmeeinheit 21 der Glasfasern 10
- C: Bewegungsrichtung der Aufnahmeeinheit 22 des optischen Elements 14
- D: erster Bearbeitungsstrahl; erster (CO2)-Laserstrahl
- E: zweiter Bearbeitungsstrahl; zweiter (CO2)-Laserstrahl
- F: Bearbeitungs-, Erwärmungs- bzw. Schweißzone des optischen Elements 14

- V: Tiefe der Vertiefung 17 der Eintrittsfläche 14a des optischen Elements 14
- W: Eindringtiefe der offenen Enden 11 der Kerne 10a der Glasfasern 10 in das optische Element 14

- X: Längsrichtung; Tiefe; Länge
- Y: Querrichtung; Breite
- Z: vertikale Richtung; Höhe
- X, Y: Horizontale; horizontale Ebene

- 1: Faseraustrittselement; Signallichtstrahlungsausgang; Faseraustrittsoptik, Faserarray
- 10: Glasfasern
- 10a: Kerne der Glasfasern 10
- 10b: Mäntel der Glasfasern 10
- 10c: Beschichtungen der Glasfaser 10
- 11: offene Enden der Kerne 10a der Glasfasern 10
- 12: Pumplichtfalle, Mantellichtentferner, Stripping-Elemente bzw. Vertiefungen der Mäntel 10b der Glasfasern 10
- 13: Spannungselement
- 14: optisches Element; optisches Fenster; optische Linse, optischer Strahlteiler; optisches Prisma
- 14a: Eintrittsfläche des optischen Elements 14
- 14b: Austrittsfläche des optischen Elements 14
- 14c: Seitenflächen des optischen Elements 14
- 15: optische Beschichtung der Austrittsfläche 14b des optischen Elements 14; Anti-Reflektionsbeschichtung
- 16: Gehäuse; Gehäuseplatte; Gestell; , Faserstecker; Wärmesenke; Rahmen
- 16a: Befestigungselemente; Durchgangsöffnungen
- 16b: Halterung des optischen Elements 14
- 17: Vertiefung der Eintrittsfläche 14a des optischen Elements 14

- 2: Bearbeitungsvorrichtung
- 20: Gehäuse
- 21: bewegliche Aufnahmeeinheit der Glasfasern 10
- 22: bewegliche Aufnahmeeinheit des optischen Elements 14
- 23: erste Bearbeitungsstrahlquelle; erste (CO2-)Laserstrahlquelle
- 23a: erstes bewegliches Ausrichtelement bzw. erster schwenkbarer Spiegel des ersten Bearbeitungsstrahls D
- 24: zweite Bearbeitungsstrahlquelle; zweite (CO2-)Laserstrahlquelle
- 24a: zweites bewegliches Ausrichtelement bzw. zweiter schwenkbarer Spiegel des zweiten Bearbeitungsstrahls E
- 25: erste Bilderfassungseinheit; erste Flächenkamera
- 26: zweite Bilderfassungseinheit; zweite Flächenkamera
- 27: Temperaturerfassungseinheit; Infrarot-Flächenkamera
- 28: Kühlungseinheit; Luftgebläse
- 29: Ausrichtungseinheit; drehbarer Greifer

## Patentansprüche

1. Faseraustrittselement (1)
mit einer Mehrzahl von Glasfasern (10) mit jeweils wenigstens einem Kern (10a), welcher jeweils ausgebildet ist, eine Signallichtstrahlung (A) zu führen, und
mit wenigstens einem optischen Element (14), vorzugsweise einem optischen Fenster (14), einer optischen Linse (14), einem optischen Strahlteiler (14) oder einem optischen Prisma (14), welches mit jeweils einem offenen Ende (11) der Kerne (10a) der Glasfasern (10) verbunden und ausgebildet ist, die Signallichtstrahlung (A) von den offenen Enden (11) der Kerne (10a) der Glasfasern (10) zu erhalten und als Austrittsstrahlungen (A') über wenigstens eine Austrittsfläche (14b) nach außerhalb abzugeben,
wobei die offenen Enden (11) der Kerne (10a) der Glasfasern (10), vorzugsweise ferner die offenen Enden (11) von die Kerne (10a) im Wesentlichen umschließenden Mänteln (10b) der Glasfasern (10), mit jeweils einer Eindringtiefe (W), vorzugsweise gegenüber einer Eintrittsfläche (14a) des optischen Elements (14), innerhalb des Materials des optischen Elements (14) angeordnet sind,
wobei wenigstens das Material der offenen Enden (11) der Kerne (10a) der Glasfasern (10), vorzugsweise ferner das Material der offenen Enden (11) der Mäntel (10b) der Glasfasern (10), mit dem Material des optischen Elements (14) verschmolzen ist,
**dadurch gekennzeichnet, dass**
wenigstens eine, vorzugsweise einige, besonders vorzugsweise alle, der Glasfasern (10) wenigstens einen Mantel (10b) aufweist, welcher den Kern (10a) im Wesentlichen umschließt,
wobei im Bereich des Faseraustrittselements (1) wenigstens eine Pumplichtfalle (12), vorzugsweise als Vertiefungen (12), in dem Material des Mantels (10b) der Glasfaser (1) ausgebildet ist, um Mantellicht aus dem Mantel (10b) der Glasfaser (1) nach außerhalb der Glasfaser (1) abzuführen,
wobei die Pumplichtfalle (12) im Bereich des Faseraustrittselements (1) vorzugsweise zusätzlich zu wenigstens einer Pumplichtfalle im vorangehenden Verlauf der Glasfaser (10) außerhalb des Bereich des Faseraustrittselements (1) ausgebildet ist.

2. Faseraustrittselement (1) nach Anspruch 1, **dadurch gekennzeichnet, dass**
das optische Element (14) im Bereich einer Eintrittsfläche (14a) mit wenigstens einigen, vorzugsweise mit allen, offenen Enden (11) der Kerne (10a) der Glasfasern (10), vorzugsweise ferner mit den offenen Enden (11) von die Kerne (10a) im Wesentlichen umschließenden Mänteln (10b) der Glasfasern (10), verbunden ist,
wobei das optische Element (14) von der Eintrittsfläche (14a) hin zur Austrittsfläche (14b) sich zumindest abschnittsweise, vorzugsweise vollständig, vorzugsweise stufenförmig oder durchgängig, zunehmend verbreiternd ausgebildet ist.

3. Faseraustrittselement (1) nach Anspruch 2, **dadurch gekennzeichnet, dass**
die Eintrittsfläche (14a) und die Austrittsfläche (14b) des optischen Elements (14) parallel oder winkelig zueinander ausgerichtet sind.

4. Faseraustrittselement (1) nach Anspruch 2 oder 3, **dadurch gekennzeichnet, dass**
wenigstens die Eintrittsfläche (14a) des optischen Elements (14), vorzugsweise alle Außenflächen (14a, 14c) des optischen Elements (14) außer der Austrittfläche (14b) des optischen Elements (14), optisch angeraut ausgebildet ist und
wenigstens die Austrittfläche (14b) des optischen Elements (14), vorzugsweise genau die Austrittfläche (14b) des optischen Elements (14), mit optisch glatter Oberflächenqualität ausgebildet ist.

5. Faseraustrittselement (1) nach einem der vorangehenden Ansprüche, **dadurch gekennzeichnet, dass**
das optische Element (14), vorzugsweise eine Eintrittsfläche (14a) des optischen Elements (14), wenigstens eine Vertiefung (17) mit einer Tiefe (V) aufweist,
wobei wenigstens einige, vorzugsweise alle, der offenen Enden (11) der Kerne (10a) der Glasfasern (10), vorzugsweise ferner das Material von die Kerne (10a) im Wesentlichen umschließenden Mänteln (10b) der Glasfasern (10), mit der Eindringtiefe (W) gegenüber der Vertiefung (17) innerhalb des Materials des optischen Elements (14) angeordnet sind, und/oder dass
wenigstens die eine Austrittfläche (14b) des optischen Elements (14) zumindest abschnittsweise, vorzugsweise vollflächig, eine optische Beschichtung (15), vorzugsweise eine optische Anti-Reflektionsbeschichtung (15), aufweist.

6. Faseraustrittselement (1) nach einem der vorangehenden Ansprüche, **gekennzeichnet durch** wenigstens ein Spannungselement (13) im Bereich des Faseraustrittselements (1), welches ausgebildet ist, eine mechanische Spannung, vorzugsweise in Form von Zugkräften, Druckkräften, Biegekräften und/oder Scherkräften, auf wenigstens den Kern (10a) einer, vorzugsweise einiger, besonders vorzugsweise aller, der Glasfasern (10), vorzugsweise und auf einen den Kern (10a) im Wesentlichen umschließenden Mantel (10b) der Glasfaser (10), über einen vorbestimmten Abschnitt der länglichen Erstreckung der Glasfasern (10) auszuüben.

7. Faseraustrittselement (1) nach einem der vorangehenden Ansprüche, **dadurch gekennzeichnet, dass**
das offene Ende (11) des Kerns (10a) wenigstens einer, vorzugsweise einiger, besonders vorzugsweise aller, der Glasfasern (10) gegenüber einer Eintrittsfläche (14a) des optischen Elements (14) wenigstens in einem ersten Winkel (α) angeordnet ist,
wobei der erste Winkel (α) 90° oder verschieden zu 90° ist,
wobei vorzugsweise die offenen Enden (11) der Kerne (10a) einiger, vorzugsweise aller, der Glasfasern (10) den gleichen ersten Winkel (α) oder unterschiedliche erste Winkel (α) aufweisen.

8. Faseraustrittselement (1) nach Anspruch 7, **dadurch gekennzeichnet, dass**
das offene Ende (11) des Kerns (10a) wenigstens einer, vorzugsweise einiger, besonders vorzugsweise aller, der Glasfasern (10) gegenüber einer Eintrittsfläche (14a) des optischen Elements (14) ferner in einem zweiten Winkel (β) angeordnet ist,
wobei der zweite Winkel (β) 90° oder verschieden zu 90° ist,
wobei vorzugsweise die offenen Enden (11) der Kerne (10a) einiger, vorzugsweise aller, der Glasfasern (10) den gleichen zweiten Winkel (β) oder unterschiedliche zweite Winkel (β) aufweisen, und/oder
wobei vorzugsweise der erste Winkel (α) und der zweite Winkel (β) gleich oder unterschiedlich sind.

9. Faseraustrittselement (1) nach einem der vorangehenden Ansprüche, **dadurch gekennzeichnet, dass**
wenigstens einige, vorzugsweise alle, der offenen Enden (11) der Kerne (10a) der Glasfasern (10), vorzugsweise ferner die offenen Enden (11) von die Kerne (10a) im Wesentlichen umschließenden Mänteln (10b) der Glasfasern (10), mit jeweils der gleichen Eindringtiefe (W) oder mit jeweils einer unterschiedlichen Eindringtiefe (W) innerhalb des Materials des optischen Elements (14) angeordnet sind.

10. Faseraustrittselement (1) nach einem der vorangehenden Ansprüche, **dadurch gekennzeichnet, dass**
wenigstens eine, vorzugsweise einige, besonders vorzugsweise alle, der Glasfasern (10) um die Achse ihrer länglichen Erstreckung eine Ausrichtbarkeit aufweist und in einer bevorzugten Ausrichtung angeordnet ist.

11. Faseraustrittselement (1) nach einem der vorangehenden Ansprüche, **dadurch gekennzeichnet, dass**
wenigstens einige, vorzugsweise alle, der offenen Enden (11) der Kerne (10a) der Glasfasern (10) zueinander linienförmig, V-förmig, kreisförmig, halbkreisförmig, bogenförmig, bündelförmig, hohlzylinderförmig oder rechteckig angeordnet sind.

12. Faseraustrittselement (1) nach einem der vorangehenden Ansprüche, **dadurch gekennzeichnet, dass**
wenigstens das offene Ende (11) des Kerns (10a) einer der Glasfasern (10) einen Mittelpunkt eines Kreises bildend angeordnet ist,
wobei wenigstens einige, vorzugsweise alle, der offenen Enden (11) der Kerne (10a) der Glasfasern (10) kreisförmig um den Mittelpunkt des Kreises angeordnet sind,
wobei vorzugsweise wenigstens ein radial innerer Kreis und ein radial äußerer Kreis gebildet werden und/oder
wobei vorzugsweise alle der offenen Enden (11) der Kerne (10a) der Glasfasern (10), vorzugsweise alle der die Kerne (10a) im Wesentlichen umschließenden Mäntel (10b) der Glasfasern (10), zueinander gleich oder unterschiedlich beabstandet oder einander berührend angeordnet sind.

13. Faseraustrittselement (1) nach einem der vorangehenden Ansprüche, **dadurch gekennzeichnet, dass**
wenigstens einige, vorzugsweise alle, der offenen Enden (11) der Kerne (10a) der Glasfasern (10), vorzugsweise alle der die Kerne (10a) im Wesentlichen umschließenden Mäntel (10b) der Glasfasern (10), zueinander gleich oder unterschiedlich beabstandet oder einander berührend angeordnet sind.

14. Faseraustrittselement (1) nach einem der vorangehenden Ansprüche, **dadurch gekennzeichnet, dass**
wenigstens einige, vorzugsweise alle, der Kerne (10a) der Glasfasern (10), vorzugsweise und/oder einige, vorzugsweise alle, die Kerne (10a) im Wesentlichen umschließenden Mäntel (10b) der Glasfasern (10), zumindest im Bereich des Faseraustrittselements (1) in ihrer länglichen Erstreckungsrichtung einen gleichbleibenden oder unterschiedlichen Durchmesser und/oder einen gleichbleibenden oder unterschiedlichen Querschnitt aufweisen.

15. Faseraustrittselement (1) nach einem der vorangehenden Ansprüche, **dadurch gekennzeichnet, dass**
wenigstens einige, vorzugsweise alle, der Kerne (10a) der Glasfasern (10), vorzugsweise und/oder einige, vorzugsweise alle, die Kerne (10a) im Wesentlichen umschließenden Mäntel (10b) der Glasfasern (10), das gleiche oder unterschiedliche Materialien und/oder den gleichen oder unterschiedliche Durchmesser und/oder den gleichen oder unterschiedliche Querschnitte, vorzugsweise kreisrund, rechteckig, quadratisch oder oktogonal, aufweisen.
